# EUROPEAN PATENT APPLICATION

(11) **EP 1 381 218 A2**
(43) Date of publication of application: **14.01.2004**
(21) Application number: 03254108.8
(22) Date of filing: 26.06.2003
(51) Int. Cl.: H04N 1/40

(54) **Light intensity correction method for image recording apparatus**

(30) Priority: 02.07.2002 JP 2002193647
(71) Applicant: KONICA CORPORATION, Tokyo (JP)
(72) Inventor: Yoneyama, Tsutomu, c/o Konica Corporation, Sayama-shi, Saitama-ken 350-1321 (JP); Hoshino, Yoshihide, c/o Konica Corporation, Sayama-shi, Saitama-ken 350-1321 (JP)
(74) Representative: Rees, Alexander Ellison

(57) **Abstract**

There is described an image recording apparatus, a color proof creating system, a computer program product and a method for correcting light intensity, which make it possible to stably perform an exposing operation for creating a color proof. The apparatus includes a photometry section, a first photometry-processing section to find first light-intensity values for every gradation level, a second photometry-processing section to find second light-intensity values for at least a specific gradation level selected out of the gradation levels, a photometry-coefficient calculating section to calculate photometry-coefficients, serving as light-intensity errors in photometry, based on the first light-intensity values and the second light-intensity values, and a light-intensity correcting section to correct the intensity of the light for every gradation level, by performing arithmetic calculations for correcting image-outputting signals of the image to be exposed onto the photosensitive material, based on the photometry-coefficients calculated by the photometry-coefficient calculating section.

## Description

### BACKGROUND OF THE INVENTION

The present invention relates to an image recording apparatus, management apparatus, color proof creating system, computer program product and light intensity correction method for image recording apparatus. More specifically, this invention relates to a management apparatus, color proof creating system, computer program product and light intensity correction method for image recording apparatus, wherein stable exposure is provided by correcting the change in light intensity caused by changes in the environment and others, when creating a color proof for checking a finished print in advance by exposing a color photosensitive material in a predetermined shade of gray, using multiple light sources having different wavelengths, based on the dot image data processed by a RIP (Raster Image Processor) or dot conversion processor.

Generally in the process of color printing, color proofing is required in the phase of the original film in some cases. In such cases, a color-separated dot original film where color is separated into C (cyan), M (magenta), Y (yellow) and K (black) used to create a color proof. Before a production print is created, inspection is made to see if there is any error in the original film layout, color and character. In this manner, means are provided to permit a finished print to be checked in advance.

In recent years, furthermore, creation of a color proof in the process of creating and editing a fully digital image with a computer requires a system called DDCP (Direct Digital Color Proof) or DCP (Digital Color Proof) that directly delivers a color image.

Before recording on a plate making film through an image setter or others from the digital image data processed by a computer, starting a final printing work of creating a printing plate directly by a CTP or recording an image directly on the print wound on the cylinder of a printer by the CTP, the above-mentioned DDCP creates a color proof that reproduces the object to be produced as indicated by the digital image processed by the computer, and checks the pattern, color tone, text, letter or the like.

To put it more specifically, a low-cost DDCP (image recording apparatus) capable of checking a dot image using a silver halide color photosensitive material is coming into widespread use. In the method using a silver halide color photosensitive material, for example, a light spot consisting of a combination of multiple beams having different wavelengths such as R, G and B is exposed to light and causes each dot of the above-mentioned C, M, Y and K to develop a color, whereby a dot image is formed.

In the image recording apparatus for recording an image on the recording material where exposure is performed by such a light source as a semiconductor laser and light emitting diode, light intensity is changed by environmental changes or secular changes, with the result that image quality is deteriorated. Therefore, the light intensity from the light source is measured at the time of exposure and output by the image recording apparatus, and the image output signal is corrected.

When correction operation is made by measuring the light intensity through actuation of a light source prior to exposure, however, the light intensity for all modified signals is measured and corrected, if the output light intensity in response to multi-scale output signals does not undergo linear transition. This method takes much time, and longer output time is also required.

In recent years, an image recording apparatus based on multi-beams has appeared on the market in order to cut the output time in particular. However, use of such multi-beams causes the number of light sources to be increased. In the above-mentioned prior art method of correction operation, the number of light sources for correction is increased, and more time is required for photometry and computational operation.

### SUMMARY OF THE INVENTION

To overcome the abovementioned drawbacks in conventional image-recording apparatus, it is an object of the present invention to provided image recording apparatus, management apparatus (hereinafter, also referred to as controlling apparatus), color proof creating system, computer program product and light intensity correction method for image recording apparatus, which make it possible to perform high-precision correcting operation of the light intensity in a shorter time without consuming much time for correcting the light intensity, even for the increased number of light sources due to the use of multi-beams, so as to output an image having a stable image density.

Accordingly, to overcome the cited shortcomings, the abovementioned object of the present invention can be attained by image recording apparatus, controlling apparatus, color proof creating systems, computer programs and light intensity correction methods described as follow.
(1) An apparatus for recording an image on a photosensitive material by exposing light, emitted from a light source capable of modulating intensity of the light, onto the photosensitive material, the apparatus comprising: a photometry section to measure the intensity of the light emitted from the light source; a first photometry-processing section to find first light-intensity values for every gradation level, based on the intensity of the light measured by the photometry section, by controlling the light source so as to emit the light based on image-outputting signals corresponding to all of gradation levels; a second photometry-processing section to find second light-intensity values for at least a specific gradation level selected out of the gradation levels, based on the intensity of the light measured by the photometry section, by controlling the light source so as to emit the light based on an image-outputting signal corresponding to the specific gradation level before exposing the image onto the photosensitive material; a photometry-coefficient calculating section to calculate photometry-coefficients, serving as light-intensity errors in photometry, based on the first light-intensity values and the second light-intensity values; and a light-intensity correcting section to correct the intensity of the light for every gradation level, by performing arithmetic calculations for correcting image-outputting signals of the image to be exposed onto the photosensitive material, based on the photometry-coefficients calculated by the photometry-coefficient calculating section.
(2) The apparatus of item 1, wherein the second photometry-processing section finds the second light-intensity values for at least a first specific gradation level selected out of middle-gradation levels included in the gradation levels and a second gradation level selected out of low-gradation levels, being lower than the middle-gradation levels, based on the intensity of the light measured by the photometry section, by controlling the light source so as to emit the light based on image-outputting signals corresponding to the first specific gradation level and the second gradation level before exposing the image onto the photosensitive material.
(3) The apparatus of item 1, wherein the apparatus includes a plurality of light sources, each of which is equivalent to the light source, and the light-intensity correcting section corrects the intensity of the light for every gradation level with respect to each of the plurality of light sources.
(4) The apparatus of item 1, wherein the light source employs a light emitting diode.
(5) The apparatus of item 1, wherein the first photometry-processing section performs a photometry-processing for finding the first light-intensity values for every gradation level at a predetermined time or a starting-up time of the apparatus.
(6) An apparatus for controlling an image-recording apparatus, which records an image on a photosensitive material by exposing light and which is provided with a photometry section to measure intensity of the light emitted from a light source capable of modulating the intensity of the light, the apparatus comprising: a first acquiring section that commands the image-recording apparatus to find first light-intensity values for every gradation level, based on the intensity of the light measured by the photometry section, by controlling the light source so as to emit the light based on image-outputting signals corresponding to all of gradation levels, in order to acquire the first light-intensity values from the image-recording apparatus; a second acquiring section that commands the image-recording apparatus to find second light-intensity values for at least a specific gradation level selected out of the gradation levels, based on the intensity of the light measured by the photometry section, by controlling the light source so as to emit the light based on an image-outputting signal corresponding to the specific gradation level before exposing the image onto the photosensitive material, in order to acquire the second light-intensity values from the image-recording apparatus before sending an image-outputting command to the image-recording apparatus; a photometry-coefficient calculating section to calculate photometry-coefficients, serving as light-intensity errors in photometry, based on the first light-intensity values and the second light-intensity values; a correcting-information generating section to generate correcting information for correcting the intensity of the light for every gradation level, by performing arithmetic calculations for correcting image-outputting signals of the image to be exposed onto the photosensitive material, based on the photometry-coefficients calculated by the photometry-coefficient calculating section; and a transmission controlling section to transmit the correcting information, generated by the correcting-information generating section, to the image-recording apparatus, and to command the image-recording apparatus to revise information stored in it, based on the correcting information transmitted.
(7) The apparatus of item 6, wherein the second acquiring section commands the image-recording apparatus to find the second light-intensity values for at least a first specific gradation level selected out of middle-gradation levels included in the gradation levels and a second gradation level selected out of low-gradation levels, being lower than the middle-gradation levels, based on the intensity of the light measured by the photometry section, by controlling the light source so as to emit the light based on image-outputting signals corresponding to the first specific gradation level and the second gradation level before exposing the image onto the photosensitive material, in order to acquire the second light-intensity values from the image-recording apparatus before sending the image-outputting command to the image-recording apparatus.
(8) A system for creating a color proof, comprising: an image-recording apparatus that records an image, serving as the color proof, on a photosensitive material by exposing light and that is provided with a photometry section to measure intensity of the light emitted from a light source capable of modulating the intensity of the light; and a controlling apparatus that is coupled to the image-recording apparatus through a communication network so as to control the image-recording apparatus by bilaterally communicating with the image-recording apparatus; wherein the controlling apparatus includes: a first acquiring section that commands the image-recording apparatus to find first light-intensity values for every gradation level, based on the intensity of the light measured by the photometry section, by controlling the light source so as to emit the light based on image-outputting signals corresponding to all of gradation levels, in order to acquire the first light-intensity values from the image-recording apparatus; a second acquiring section that commands the image-recording apparatus to find second light-intensity values for at least a specific gradation level selected out of the gradation levels, based on the intensity of the light measured by the photometry section, by controlling the light source so as to emit the light based on an image-outputting signal corresponding to the specific gradation level before exposing the image onto the photosensitive material, in order to acquire the second light-intensity values from the image-recording apparatus before sending an image-outputting command to the image-recording apparatus; a photometry-coefficient calculating section to calculate photometry-coefficients, serving as light-intensity errors in photometry, based on the first light-intensity values and the second light-intensity values; a correcting-information generating section to generate correcting information for correcting the intensity of the light for every gradation level, by performing arithmetic calculations for correcting image-outputting signals of the image to be exposed onto the photosensitive material, based on the photometry-coefficients calculated by the photometry-coefficient calculating section; and a transmission controlling section to transmit the correcting information, generated by the correcting-information generating section, to the image-recording apparatus, and to command the image-recording apparatus to revise information stored in it, based on the correcting information transmitted.
(9) A system for creating a color proof, comprising: an information terminal device to edit a color image so as to output an edited-image data file; an image-processing apparatus that is coupled to the information terminal device through a communication network so as to process the edited-image data file received from the information terminal device by bilaterally communicating with the information terminal device; and an image-recording apparatus that is coupled to the image-processing apparatus through the communication network so as to create the color proof by bilaterally communicating with the image-processing apparatus; wherein the image-processing apparatus develops and divides the edited-image data file, including a plurality of color data sets, into a plurality of color-form data sets, each of which corresponds to each of predetermined primary colors for printing, and sequentially transmits the plurality of color-form data sets to the image-recording apparatus through the communication network; and wherein the image-recording apparatus creates the color proof based on the plurality of color-form data sets, transmitted from the image-processing apparatus, by exposing light, emitted from a light source capable of modulating intensity of the light, onto a photosensitive material, and the image-recording apparatus comprises: a photometry section to measure the intensity of the light emitted from the light source; a first photometry-processing section to find first light-intensity values for every gradation level, based on the intensity of the light measured by the photometry section, by controlling the light source so as to emit the light based on image-outputting signals corresponding to all of gradation levels; a second photometry-processing section to find second light-intensity values for at least a specific gradation level selected out of the gradation levels, based on the intensity of the light measured by the photometry section, by controlling the light source so as to emit the light based on an image-outputting signal corresponding to the specific gradation level before exposing the image onto the photosensitive material; a photometry-coefficient calculating section to calculate photometry-coefficients, serving as light-intensity errors in photometry, based on the first light-intensity values and the second light-intensity values; and a light-intensity correcting section to correct the intensity of the light for every gradation level, by performing arithmetic calculations for correcting image-outputting signals of the image to be exposed onto the photosensitive material, based on the photometry-coefficients calculated by the photometry-coefficient calculating section.
(10) The system of item 9, further comprising: a host controlling apparatus that is coupled to the image-recording apparatus through a communication network so as to control the image-recording apparatus by bilaterally communicating with the image-recording apparatus.
(11) The system of item 9, further comprising: a controlling apparatus that is coupled to the image-recording apparatus through a communication network so as to control the image-recording apparatus by bilaterally communicating with the image-recording apparatus; and a host controlling apparatus that is coupled to the controlling apparatus through the communication network so as to control the controlling apparatus by bilaterally communicating with the controlling apparatus.
(12) A computer program for executing a light-intensity correcting operation in an image-recording apparatus, which creates a color proof on a photosensitive material by exposing light and which is provided with a photometry section to measure intensity of the light emitted from a light source capable of modulating the intensity of the light, the computer program comprising the functional steps of: finding first light-intensity values for every gradation level, based on the intensity of the light measured by the photometry section, by controlling the light source so as to emit the light based on image-outputting signals corresponding to all of gradation levels; finding second light-intensity values for at least a specific gradation level selected out of the gradation levels, based on the intensity of the light measured by the photometry section, by controlling the light source so as to emit the light based on an image-outputting signal corresponding to the specific gradation level before exposing an image onto the photosensitive material; calculating photometry-coefficients, serving as light-intensity errors in photometry, based on the first light-intensity values and the second light-intensity values; and correcting the intensity of the light for every gradation level, by performing arithmetic calculations for correcting image-outputting signals of the image to be exposed onto the photosensitive material, based on the photometry-coefficients calculated in the calculating step.
(13) The computer program of item 12, wherein, in the second finding step, the second light-intensity values for at least a first specific gradation level selected out of middle-gradation levels included in the gradation levels and a second gradation level selected out of low-gradation levels, being lower than the middle-gradation levels, are found, based on the intensity of the light measured by the photometry section, by controlling the light source so as to emit the light based on image-outputting signals corresponding to the first specific gradation level and the second gradation level before exposing the image onto the photosensitive material.
(14) A computer program for controlling an image-recording apparatus, which creates a color proof on a photosensitive material by exposing light and which is provided with a photometry section to measure intensity of the light emitted from a light source capable of modulating the intensity of the light, the computer program comprising the functional steps of: commanding the image-recording apparatus to find first light-intensity values for every gradation level, based on the intensity of the light measured by the photometry section, by controlling the light source so as to emit the light based on image-outputting signals corresponding to all of gradation levels, in order to acquire the first light-intensity values from the image-recording apparatus; commanding the image-recording apparatus to find second light-intensity values for at least a specific gradation level selected out of the gradation levels, based on the intensity of the light measured by the photometry section, by controlling the light source so as to emit the light based on an image-outputting signal corresponding to the specific gradation level before exposing an image onto the photosensitive material, in order to acquire the second light-intensity values from the image-recording apparatus before sending an image-outputting command to the image-recording apparatus; calculating photometry-coefficients, serving as light-intensity errors in photometry, based on the first light-intensity values and the second light-intensity values acquired in the first commanding step and the second commanding step, respectively; generating correcting information for correcting the intensity of the light for every gradation level, by performing arithmetic calculations for correcting image-outputting signals of the image to be exposed onto the photosensitive material, based on the photometry-coefficients calculated in the calculating step; transmitting the correcting information, generated in the generating step, to the image-recording apparatus; and commanding the image-recording apparatus to revise information stored in it, based on the correcting information transmitted.
(15) The computer program of item 14, wherein, in the second commanding step, the image-recording apparatus finds the second light-intensity values for at least a first specific gradation level selected out of middle-gradation levels included in the gradation levels and a second gradation level selected out of low-gradation levels, being lower than the middle-gradation levels, based on the intensity of the light measured by the photometry section, by controlling the light source so as to emit the light based on image-outputting signals corresponding to the first specific gradation level and the second gradation level before exposing the image onto the photosensitive material.
(16) A method for performing a light-intensity correcting operation in an image-recording apparatus, which records an image on a photosensitive material by exposing light and which is provided with a photometry section to measure intensity of the light emitted from a light source capable of modulating the intensity of the light, the method comprising the steps of: finding first light-intensity values for every gradation level, based on the intensity of the light measured by the photometry section, by controlling the light source so as to emit the light based on image-outputting signals corresponding to all of gradation levels; finding second light-intensity values for at least a specific gradation level selected out of the gradation levels, based on the intensity of the light measured by the photometry section, by controlling the light source so as to emit the light based on an image-outputting signal corresponding to the specific gradation level before exposing the image onto the photosensitive material; calculating photometry-coefficients, serving as light-intensity errors in photometry, based on the first light-intensity values and the second light-intensity values; and correcting the intensity of the light for every gradation level, by performing arithmetic calculations for correcting image-outputting signals of the image to be exposed onto the photosensitive material, based on the photometry-coefficients calculated in the calculating step.
(17) The method of item 16, wherein, in the second finding step, the second light-intensity values for at least a first specific gradation level selected out of middle-gradation levels included in the gradation levels and a second gradation level selected out of low-gradation levels, being lower than the middle-gradation levels, are found, based on the intensity of the light measured by the photometry section, by controlling the light source so as to emit the light based on image-outputting signals corresponding to the first specific gradation level and the second gradation level before exposing the image onto the photosensitive material.
(18) The method of item 16, wherein the image-recording apparatus includes a plurality of light sources, each of which is equivalent to the light source, and the light-intensity correcting operation for correcting the intensity of the light for every gradation level is performed with respect to each of the plurality of light sources.
(19) The method of item 16, wherein the light source employs a light emitting diode.
(20) The apparatus of item 16, wherein, in the first finding step, a photometry-processing for finding the first light-intensity values for every gradation level is performed at a predetermined time or a starting-up time of the apparatus.
   Further, to overcome the abovementioned problems, other image recording apparatus, other management apparatus, other color proof creating systems, other computer programs and other light intensity correction methods, embodied in the present invention, will be described as follow:
(21) An image-recording apparatus, which records an image by exposing light, emitted from a light source capable of modulating intensity of the light, onto the photosensitive material, characterized by comprising:
   photometry means for measuring the intensity of the light emitted from the light source;
   first light-intensity photometry-processing means for finding light-intensity values for every gradation level, when measuring light-intensity with the photometry means by emitting the light from the light source based on image-outputting signals of all gradation levels;
   second light-intensity photometry-processing means for finding before-exposure light-intensity values, when performing one point photometry with the photometry means by selecting at least one specific gradation level out of image-outputting signals of multi-stage gradation levels and by emitting the light based on the specific gradation level before exposing the image;
   photometry-coefficient calculating means for calculating light-intensity errors in photometry as photometry-coefficients, based on the light-intensity values and the before-exposure light-intensity values; and
   light-intensity correcting means for correcting the intensity of the light for every gradation level, by performing arithmetic calculations for image-outputting signals at the time of exposing the image, based on the photometry-coefficients calculated by the photometry-coefficient calculating means.
(22) An image-recording apparatus, which records an image by exposing light, emitted from a light source capable of modulating intensity of the light, onto the photosensitive material, characterized by comprising:
   photometry means for measuring the intensity of the light emitted from the light source;
   first light-intensity photometry-processing means for finding light-intensity values for every gradation level, when measuring light-intensity with the photometry means by emitting the light from the light source based on image-outputting signals of all gradation levels;
   second light-intensity photometry-processing means for finding before-exposure light-intensity values, when performing photometry operation with the photometry means by selecting at least one specific gradation level, being equivalent to a middle light-intensity level, and plural gradation levels, being equivalent to a low light-intensity level lower than the middle light-intensity level, out of image-outputting signals of multi-stage gradation levels, and by emitting the light based on the specific gradation level before exposing the image;
   photometry-coefficient calculating means for calculating light-intensity errors in photometry as photometry-coefficients, based on the light-intensity values and the before-exposure light-intensity values; and
   light-intensity correcting means for correcting the intensity of the light for every gradation level, by performing arithmetic calculations for image-outputting signals at the time of exposing the image, based on the photometry-coefficients calculated by the photometry-coefficient calculating means.
(23) The image-recording apparatus, described in item 1 or item 2, characterized in that,
   the light-intensity correcting means respectively performs the light-intensity correcting operation with respect to each of the light-intensities of a plurality of light sources.
(24) The image-recording apparatus, described in anyone of items 1 - 3, characterized in that,
   the light source employs a LED light source.
(25) The image-recording apparatus, described in item 1 or item 2, characterized in that,
   a photometry-processing by the first light-intensity photometry-processing means is performed at a predetermined time or a starting-up time of the apparatus.
(26) A management apparatus, which manages an image-recording apparatus provided with photometry means for measuring intensity of the light emitted from a light source capable of modulating the intensity of the light, characterized by comprising:
   first acquiring means for acquiring information of light-intensity values for every gradation level in the photometry means, by commanding the image-recording apparatus to measure light-intensity with the photometry means by emitting the light from the light source based on image-outputting signals of all gradation levels;
   second acquiring means for acquiring information of before-exposure light-intensity values in one point photometry with the photometry means, by commanding the image-recording apparatus to select at least one specific gradation level out of image-outputting signals of multi-stage gradation levels and to perform one point photometry operation with the photometry means by emitting the light from the light source based on the specific gradation level before sending an image-outputting command to the image-recording apparatus
   photometry-coefficient calculating means for calculating light-intensity errors in photometry as photometry-coefficients, based on the light-intensity values and the before-exposure light-intensity values;
   light-intensity correcting means for correcting the light-intensity by performing arithmetic calculations for image-outputting signals at the time of exposing the image, based on the photometry-coefficients calculated by the photometry-coefficient calculating means; and
   transmission controlling means for commanding so as to transmit the corrected-result information in the light-intensity correcting means to the image-recording apparatus and to revise information stored in the image-recording apparatus.
(27) A management apparatus, which manages an image-recording apparatus provided with photometry means for measuring intensity of the light emitted from a light source capable of modulating the intensity of the light, characterized by comprising:
   first acquiring means for acquiring information of light-intensity values for every gradation level in the photometry means, by commanding the image-recording apparatus to measure light-intensity with the photometry means by emitting the light from the light source based on image-outputting signals of all gradation levels;
   second acquiring means for acquiring information of before-exposure light-intensity values in the photometry means, by commanding the image-recording apparatus to select at least one specific gradation level, being equivalent to a middle light-intensity level, and plural gradation levels, being equivalent to a low light-intensity level lower than the middle light-intensity level, out of image-outputting signals of multi-stage gradation levels and to perform one point photometry operation with the photometry means by emitting the light from the light source based on the specific gradation level before sending an image-outputting command to the image-recording apparatus;
   photometry-coefficient calculating means for calculating light-intensity errors in photometry as photometry-coefficients, based on the light-intensity values and the before-exposure light-intensity values;
   light-intensity correcting means for correcting the light-intensity by performing arithmetic calculations for image-outputting signals at the time of exposing the image, based on the photometry-coefficients calculated by the photometry-coefficient calculating means; and
   transmission controlling means for commanding so as to transmit the corrected-result information in the light-intensity correcting means to the image-recording apparatus and to revise information stored in the image-recording apparatus.
(28) A color proof creating system, characterized by comprising:
   the image-recording apparatus described in anyone of items 21 - 25; and
   the management apparatus, described in item 26 or item 27, being capable of communicating with the image-recording apparatus through a communication network.
(29) A color proof creating system, characterized by comprising:
   one or plural information terminal device(s) of image editing use, to edit an image;
   an image-processing apparatus that is capable of communicating with the information terminal devices through a communication network, and receives edited-image files edited in each of the information terminal devices, and develops and divides the edited-image data file, including a plurality of color data sets, into a plurality of color-form data sets, each of which corresponds to each of predetermined primary colors for printing, and sequentially transmits the plurality of color-form data sets to the image-recording apparatus through the communication network; and
   the image-recording apparatus, described in anyone of items 21 - 25, that is capable of communicating with the image-processing apparatus through the communication network, and respectively creates and outputs each color proof, based on each of the plurality of color-form data sets.
(30) A color proof creating system, characterized by comprising:
   one or plural information terminal device(s) of image editing use, to edit an image;
   an image-processing apparatus that is capable of communicating with the information terminal devices through a communication network, and receives edited-image files edited in each of the information terminal devices, and develops and divides the edited-image data file, including a plurality of color data sets, into a plurality of color-form data sets, each of which corresponds to each of predetermined primary colors for printing, and sequentially transmits the plurality of color-form data sets to the image-recording apparatus through the communication network;
   the image-recording apparatus, described in anyone of items 21 - 25, that is capable of communicating with the image-processing apparatus through the communication network, and respectively creates and outputs each color proof, based on each of the plurality of color-form data sets; and
   a host that is capable of communicating with the image-recording apparatus through the communication network to manage the image-recording apparatus.
(31) A color proof creating system, characterized by comprising:
   one or plural information terminal device(s) of image editing use, to edit an image;
   an image-processing apparatus that is capable of communicating with the information terminal devices through a communication network, and receives edited-image files edited in each of the information terminal devices, and develops and divides the edited-image data file, including a plurality of color data sets, into a plurality of color-form data sets, each of which corresponds to each of predetermined primary colors for printing, and sequentially transmits the plurality of color-form data sets to the image-recording apparatus through the communication network;
   the image-recording apparatus, described in anyone of items 21 - 25, that is capable of communicating with the image-processing apparatus through the communication network, and respectively creates and outputs each color proof, based on each of the plurality of color-form data sets;
   a sub-host that is capable of communicating with the image-recording apparatus through the communication network to manage the image-recording apparatus; and
   a host that is capable of communicating with the sub-host through the communication network to manage the sub-host.
(32) A computer program product having a computer readable medium, in which a program, for performing a light-intensity correcting processing at the time of a color proof creating processing performed by an image-recording apparatus provided with photometry means for measuring the intensity of the light emitted from the light source capable of modulating intensity of the light, is recorded, the computer program product characterized by comprising:
   first light-intensity photometry-processing means for finding light-intensity values for every gradation level, when measuring light-intensity with the photometry means by emitting the light from the light source based on image-outputting signals of all gradation levels;
   second light-intensity photometry-processing means for finding before-exposure light-intensity values, when performing one point photometry with the photometry means by selecting at least one specific gradation level out of image-outputting signals of multi-stage gradation levels and by emitting the light based on the specific gradation level before exposing the image;
   photometry-coefficient calculating means for calculating light-intensity errors in photometry as photometry-coefficients, based on the light-intensity values and the before-exposure light-intensity values; and
   light-intensity correcting means for correcting the intensity of the light for every gradation level, by performing arithmetic calculations for image-outputting signals at the time of exposing the image, based on the photometry-coefficients calculated by the photometry-coefficient calculating means.
(33) A computer program product having a computer readable medium, in which a program, for performing a light-intensity correcting processing at the time of a color proof creating processing performed by an image-recording apparatus provided with photometry means for measuring the intensity of the light emitted from the light source capable of modulating intensity of the light, is recorded, the computer program product characterized by comprising:
   first light-intensity photometry-processing means for finding light-intensity values for every gradation level, when measuring light-intensity with the photometry means by emitting the light from the light source based on image-outputting signals of all gradation levels;
   second light-intensity photometry-processing means for finding before-exposure light-intensity values, when performing photometry operation with the photometry means by selecting at least one specific gradation level, being equivalent to a middle light-intensity level, and plural gradation levels, being equivalent to a low light-intensity level lower than the middle light-intensity level, out of image-outputting signals of multi-stage gradation levels, and by emitting the light based on the specific gradation level before exposing the image;
   photometry-coefficient calculating means for calculating light-intensity errors in photometry as photometry-coefficients, based on the light-intensity values and the before-exposure light-intensity values; and
   light-intensity correcting means for correcting the intensity of the light for every gradation level, by performing arithmetic calculations for image-outputting signals at the time of exposing the image, based on the photometry-coefficients calculated by the photometry-coefficient calculating means.
(34) A computer program product having a computer readable medium, in which a program, for performing a light-intensity correcting processing at the time of a color proof creating processing performed by an image-recording apparatus provided with photometry means for measuring the intensity of the light emitted from the light source capable of modulating intensity of the light, is recorded, the computer program product characterized by comprising:
   first acquiring means for acquiring information of light-intensity values for every gradation level in the photometry means, by commanding the image-recording apparatus to measure light-intensity with the photometry means by emitting the light from the light source based on image-outputting signals of all gradation levels;
   second acquiring means for acquiring information of before-exposure light-intensity values in one point photometry with the photometry means, by commanding the image-recording apparatus to select at least one specific gradation level out of image-outputting signals of multi-stage gradation levels and to perform one point photometry operation with the photometry means by emitting the light from the light source based on the specific gradation level before sending an image-outputting command to the image-recording apparatus
   photometry-coefficient calculating means for calculating light-intensity errors in photometry as photometry-coefficients, based on the light-intensity values and the before-exposure light-intensity values; and
   light-intensity correcting means for correcting the light-intensity by performing arithmetic calculations for image-outputting signals at the time of exposing the image, based on the photometry-coefficients calculated by the photometry-coefficient calculating means.
(35) A computer program product having a computer readable medium, in which a program, for performing a light-intensity correcting processing at the time of a color proof creating processing performed by an image-recording apparatus provided with photometry means for measuring the intensity of the light emitted from the light source capable of modulating intensity of the light, is recorded, the computer program product characterized by comprising:
   first acquiring means for acquiring information of light-intensity values for every gradation level in the photometry means, by commanding the image-recording apparatus to measure light-intensity with the photometry means by emitting the light from the light source based on image-outputting signals of all gradation levels;
   second acquiring means for acquiring information of before-exposure light-intensity values in the photometry means, by commanding the image-recording apparatus to select at least one specific gradation level, being equivalent to a middle light-intensity level, and plural gradation levels, being equivalent to a low light-intensity level lower than the middle light-intensity level, out of image-outputting signals of multi-stage gradation levels and to perform one point photometry operation with the photometry means by emitting the light from the light source based on the specific gradation level before sending an image-outputting command to the image-recording apparatus;
   photometry-coefficient calculating means for calculating light-intensity errors in photometry as photometry-coefficients, based on the light-intensity values and the before-exposure light-intensity values; and
   light-intensity correcting means for correcting the light-intensity by performing arithmetic calculations for image-outputting signals at the time of exposing the image, based on the photometry-coefficients calculated by the photometry-coefficient calculating means.
(36) A light-intensity correcting method of an image-recording apparatus, which records an image by exposing light emitted from a light source capable of modulating intensity of the light onto a photosensitive material, characterized by comprising the steps of
   extracting light-intensity values for every gradation level when a photometry means measures the light-intensity by emitting the light from the light source based on image-outputting signals corresponding to all of gradation levels;
   extracting before-exposure light-intensity values, when performing one point photometry with the photometry means by selecting at least one specific gradation level out of image-outputting signals of multi-stage gradation levels and by emitting the light based on the specific gradation level before exposing the image;
   calculating light-intensity errors in photometry as photometry-coefficients, based on the light-intensity values and the before-exposure light-intensity values; and
   correcting the intensity of the light based on the photometry-coefficients.
(37) A light-intensity correcting method of an image-recording apparatus, which records an image by exposing light emitted from a light source capable of modulating intensity of the light onto a photosensitive material, characterized by comprising the steps of
   extracting light-intensity values for every gradation level when a photometry means measures the light-intensity by emitting the light from the light source based on image-outputting signals corresponding to all of gradation levels;
   extracting before-exposure light-intensity values, when performing photometry operation with the photometry means by selecting at least one specific gradation level, being equivalent to a middle light-intensity level, and plural gradation levels, being equivalent to a low light-intensity level lower than the middle light-intensity level, out of image-outputting signals of multi-stage gradation levels, and by emitting the light based on the specific gradation level before exposing the image;
   calculating light-intensity errors in photometry as photometry-coefficients, based on the light-intensity values and the before-exposure light-intensity values; and
   correcting the intensity of the light based on the photometry-coefficients.

### BRIEF DESCRIPTION OF THE DRAWINGS

Other objects and advantages of the present invention will become apparent upon reading the following detailed description and upon reference to the drawings in which:
Fig. 1 is a block diagram representing an example of the overall configuration of an image recording apparatus as an embodiment of the present invention;
Fig. 2 is a functional block diagram representing the detailed configuration of the image recording apparatus given in Fig. 1;
Fig. 3 is a cross sectional view representing the internal configuration of an exposure unit and development unit of the image recording apparatus given in Fig. 1;
Fig. 4(A) and Fig. 4(B) are explanatory diagrams representing the configuration of a photometer of the image recording apparatus given in Fig. 1;
Figs. 5(A) and Figs. 5(B) are explanatory diagrams representing an example of the configuration of an optical unit of the image recording apparatus; Fig. 5(C) is an explanatory diagram representing exposure by multi-beams;
Fig. 6 is a block diagram representing the configuration of the control system of an exposure section of the image recording apparatus given in Fig. 1;
Fig. 7(A), Fig. 7(B) and Fig. 7(C) are explanatory diagrams representing an example of the configuration of various tables used in the image recording apparatus given in Fig. 1;
Fig. 8(A) is an explanatory diagram representing an example of the configuration of a light intensity measuring table; Fig. 8(B) is an explanatory diagram representing the relationship between monitored beam value and LUT value;
Fig. 9(A) is an explanatory diagram representing an example of the configuration of a light intensity measuring table by single photometry; Fig. 9(B) is an explanatory diagram representing the relationship between the analog-to-digital value of the analog-to-digital converter for analog-to-digital conversion of the data from a photometer and LUT value;
Fig. 10 is an explanatory diagram for simplified explanation of the correction of light intensity;
Fig. 11 is an explanatory diagram for explanation of the relationship between the LUT value and analog-to-digital value error;
Fig. 12 is a flowchart representing an example of the light intensity correction procedure for an image recording apparatus as an embodiment of the present invention;
Fig. 13 is a flowchart showing the details of Fig. 12;
Fig. 14 is a flowchart showing the further details of Fig. 12;
Fig. 15 is a flowchart showing the still further details of Fig. 12;
Fig. 16 is a network configuration diagram representing an example of the approximate configuration of the entire color proof creating system as another embodiment of the present invention; and
Fig. 17 is a functional block diagram representing the detailed configuration of a management apparatus and an image recording apparatus of the color proof creating system in Fig. 16.

### DETAILED DESCRIPTION OF THE PREFERRED EMBODIMENT

The following specifically describes an example of the preferred embodiment of the present invention with reference to drawing.

### [First Embodiment]

### (Overall Configuration of Image Recording Apparatus)

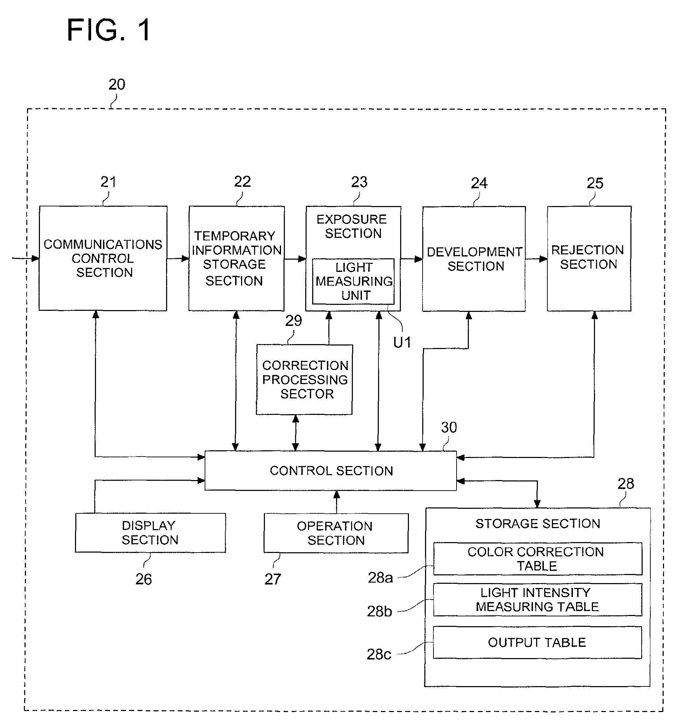

Referring to Fig. 1, the following describes the overall configuration of an image recording apparatus as an embodiment of the present invention. Fig. 1 is a block diagram representing an example of the overall configuration of an image recording apparatus as an embodiment of the present invention.

An image recording apparatus 20 as an embodiment of the present invention records an image on a photosensitive material through exposure by multiple light sources. As shown in Fig. 1, it comprises: a communications control section 21 that receives the dot image data, for example, of C, M, Y and K of the RIP and others, a temporary information storage section 22 for storing the dot image data received through the communications control section 21 (the dot image data in the amount equivalent to at least one page), an exposure section 23 for providing laser exposure by converting into an exposure format corresponding to the number of scanning lines (corresponding to one main scanning operation) based on the dot image data of the temporary information storage section 22, reading the pixel data consisting of all the data in the amount corresponding to one sheet of all colors Y, M, C and BK in the exposure format for each number of scanning lines using the converted dot image data, and simultaneously outputting the data of all colors (according to dot sequential system), a development section 24 for developing such a sheet as a photosensitive material from the exposure section 23, an ejection section 25 for ensuing that printing paper on which the color image developed by the development section 24 is formed is ejected as color proof, a display section 26 and an operation section 27 for various operations, a storage section 28 for storing a color correction table 28a for defining the amount of light exposure (emission intensity) of a light source in response to reproduced color that can be reproduced by the exposure through the light source, a light intensity measuring table 28b and an output table 28c (to be described later), a correction processing sector 29 for processing various correction operations to correct the light intensity of the light source exposed by the exposure section 23, and a control section 30 for controlling the above-mentioned sections.

The temporary information storage section 22 temporarily stores in a predetermined position the dot image data sent from the RIP or the like for each color. The dot image data converted into the exposure format corresponding to the number of scanning lines (corresponding to one main scanning operation) is also temporarily stored into another predetermined area in the amount corresponding to one sheet of all colors Y, M, C and BK by means of the control section 30.

The exposure section 23 incorporates a measuring unit U1 for measuring the amount of light exposure light emitted from the light source. The data on the amount of light intensity measured by the light measuring unit U1 is stored in a predetermined area of the storage section 28 through the control section 30 and is used for correction operation by the correction processing sector 29 or the like.

As will be described later in details, if light is measured at a periodic time interval or at the time of the apparatus booting, light is emitted from each light source in all gradations. The value of light intensity at each gradation value when measured by the above-mentioned measured unit U1 is stored in the storage section 28 as the light intensity measuring table 28b. When light is measured prior to exposure, one specific gradation is selected to allow light to be emitted. The value of light intensity prior to exposure as measured by the light measuring unit U1 is stored in a predetermined area of the storage section 28.

The display section 26 is a displays means (liquid crystal display panel) for displaying the status of the image recording apparatus 20 and various types of information. At the same time, it is also a means for display and operation (a touch panel) for entering information on various settings and operations. The parameters to be set by the operation section 27 and display section 26 (setting information) include output resolution, dot information, positive/negative setting, various types of table information for adjusting various types of colors, and log in the case of image recording apparatus 20.

The storage section 28 contains the color correction table 28a, light intensity measuring table 28b and output table 28c. For example, if one has a specific access right to the color correction table 28a, one is authorized to update or set data by using the display section 26 and operation section 27. Further, it is preferred to prepare each table in multiple numbers in conformity to the differences in the type of specific paper, ink and printing conditions.

Based on the correlation between each color of the above-mentioned color correction table 28a and information on the amount of light exposure, digital dot image data of Y, M, C and K of the exposure format is converted into exposure intensity data of B, R and G. In this case, dot image data of Y, M, C and K of the print for each pixel is converted into a combination of the laser intensities of B, R and G.

The correction processing sector 29 consists of a group of various operation programs in order to process various correction operations for calculating the light intensity for exposure by each of multiple light sources located inside the exposure section 23, using the color correction table 28a, light intensity measuring table 28b and output table 28c of the storage section 28.

The control section 30 reads the pixel image data consisting of all the data of Y, M, C and BK of the temporary information storage section 22 in the exposure format for the number of scanning lines, and simultaneously outputs the data of all colors (according to dot sequential system), thereby allowing an image to be exposed on a photosensitive material by the exposure section 23.

The exposure section 23 uses the above-mentioned control section 30 to set a roll of silver halide color photosensitive material as a photosensitive material, and cuts it into sheets. After that, exposure is carried out by laser beam or the like in conformity to dot image data.

In this case, the amount of light exposure output from the exposure section 23 is corrected (details of the correction processing such as photometric coefficient to be described later) with respect to the amount of light of the color correction table 28a by means of the toner outlet member 29, and the amount of correction light is calculated. The LUT value corresponding to the amount of the correction light is extracted by the light intensity measuring table 28b, and the amount of light exposure is determined based on the LUT value of each of Y, M and C for each reproduced color of the output table 28c rewritten based on the extracted LUT value.

The control section 30 allows photosensitive material (recording material) exposed by the exposure section 23 to be developed by the development section 24, and the photosensitive material to be output from the ejection section 25, whereby a color proof is created.

In the image recording apparatus 20 having the above-mentioned configuration, the following operations are performed: The dot image data of each color (Y, M, C and BK) created by the RIP or the like is temporarily stored in the temporary information storage section 22 through the communications control section 21. While the change in transfer speed is accumulated in the temporary information storage section 22, simultaneous reading of the data of all colors is carried out by a dot clock or the like, and the data is sent to the storage section 28 containing the LUT such as the color correction table 28a.

To put it in greater details, dot image data of each color is converted into the exposure format corresponding to the number of scanning lines (corresponding to one main scanning operation) by the image recording apparatus 20, and is stored in a predetermined area of the temporary information storage section 22 of the image recording apparatus 20. In this case, the dot image data (data separated into Y, M, C and BK corresponding to the printing plate) is rearranged and converted into the array of data corresponding to one scanning operation by the number of beams of multiple light sources on the exposure section 23.

After the dot image data converted into the exposure format corresponding to the number of scanning lines (corresponding to one scanning operation) in the amount corresponding to one sheet of all colors Y, M, C and BK (dot image data in the amount corresponding to one sheet of all colors required to create a color proof) has been accumulated, the pixel data consisting of all the data of all colors Y, M, C and BK is read in the exposure format for each number of scanning lines, and the data of all colors are simultaneously output (according to dot sequential system).

The control section 30 counts the number of the pixels of the dot based on the image data formed by converting the pixel data consisting of all the data of the input Y, M, C and BK into the exposure format for each number of scanning lines. This counting operation is carried out continuously for the pixels of dot image data corresponding to one line or one page. Dots in the direction of main scanning and dots in the direction of sub-scanning (the number of lines) are counted for the dot image data. Control is provided in such a way that, while the image size is calculated with reference to these counts, the control section 30 allows the image to be exposed on the photosensitive material by the exposure section 23.

Before exposure, photometric operation is carried out for each light source only with respect to the value of specific gradation by the light measuring unit U1. Based on this measured value and the value of light intensity in the color correction table 28a, the toner outlet member 29 processes rewriting of the light intensity measuring table 28b or output table 28c to make correction. The drive current value of the light source is determined by the gradation value of the output table 28c and the like after correction, whereby exposure by light sources is carried out.

Thus, in the image recording apparatus 20, a roll of silver halide color photosensitive material is set as a photosensitive material, and is cut into sheets. After that, exposure is carried out by the exposure section 23 using laser beams in conformity to rearranged dot image data. Then development processing is performed in the development section 24 and the photosensitive material is ejected by the ejection section 25, whereby a color proof is created.

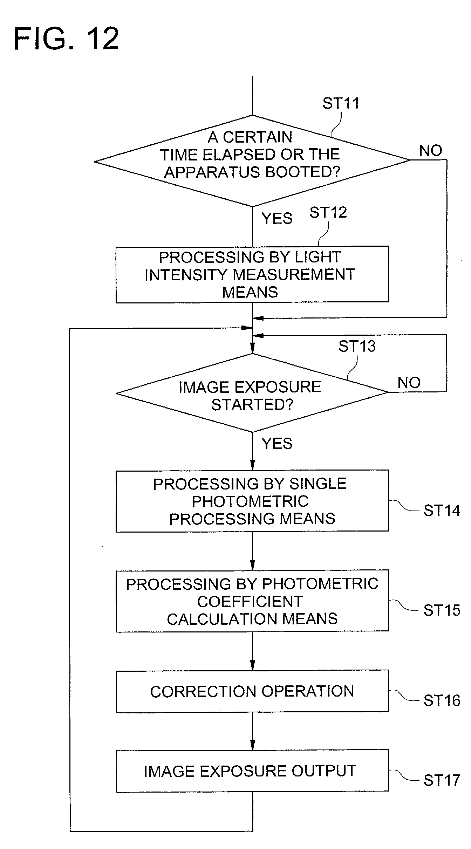

As described above, when creating a color print, before creating an image data of raster image format from the digital image data described in a great variety of formats to create a printing plate, an image data of raster image format is generated from the digital image data using the storage section 28 by the data processing section 12 (Fig. 12). It is rearranged into the image data of a format conforming to the image recording apparatus 20 by means of the storage section 28. The image is stored based on this rearranged image data, and correction of various levels of density is performed on the basis of the density value. Then it is converted into the amount of light exposure to perform exposure, thereby creating the color proof that simulates the image obtained by printing with the printing plate created according to the digital image data described in various formats. The image shown by digital image data is checked to see whether or not any error is found in the layout, color and letter, whereby a finished print can be confirmed in advance.

According to the embodiment of the present invention, when a change has occurred to the light intensity of the light source due to the environment or secular changes, the light intensity of the output modulated signal on one of multiple scales is measured by the light measuring unit U1, and correction operation is performed for all output light intensities, thereby reducing the time required in the entire image output process including the correction operation. Before explaining the specific processing of such correction operation, the following describes the specific configuration of the optical unit inside the exposure section, the overall mechanical configuration of the image recording apparatus and control system configuration.

### (Mechanical configuration of image recording apparatus)

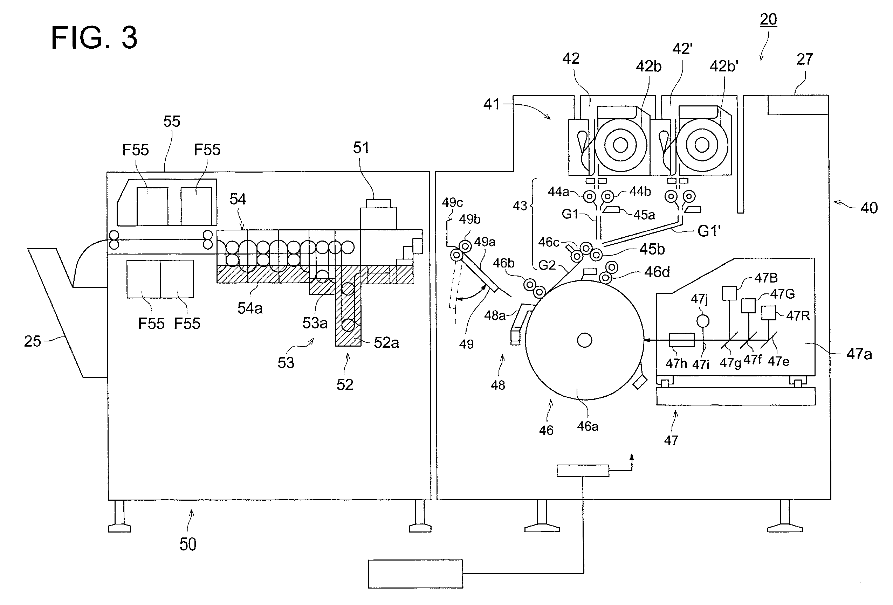

Mechanical configuration of image recording apparatus 20 will be described with reference to Fig. 3. Fig. 3 is a cross sectional view representing the internal configuration of an exposure unit and development unit of the image recording apparatus.

As the external mechanical configuration is shown in Fig. 3, the image recording apparatus 20 consists broadly of an exposure unit 40 for exposing the photosensitive material constituting the recording material and a developing unit 50 for developing the photosensitive material exposed by this exposure unit 40.

Incidentally, the exposure unit 40 contains a communications control section 21, temporary information storage section 22, exposure section 23, display section 26, operation section 27, storage section 28, toner outlet member 29 and control section 30, as shown in Fig. 1. The developing unit 50 includes a development section 24 and ejection section 25 as shown in Fig. 1.

Returning back to Fig. 3, two paper loading sections 42 and 42' and operation section 27 are arranged on the top of the exposure unit 40. The operation section 27 consists of a touch panel mounted on the liquid crystal panel. An ejection section 25 for ejecting the processed photosensitive material is mounted on the side of the developing unit 50.

As shown in Fig. 3, a paper feed section 41, main scanning section 46, sub-scanning section 47, paper ejection section 48 and accumulation section 49 are arranged inside the exposure unit 40.

The paper feed section 41 consists of two paper loading sections 42 and 42' and lower paper supply section 43 that supplies the drum 46a of the main scanning section with the photosensitive material fed from the paper loading sections 42 and 42'. The paper loading section 42 is configured in a compartment structure, and a special-purpose cartridge with a roll of photosensitive material contained therein is set inside the paper loading section 42. On the bottom of the paper loading section 42, the photosensitive material is supplied to the drum 46a of the main scanning section 46 through the paper feed paths G1, G1' and G2.

The drum 46a on the surface of which photosensitive material is placed is rotatably mounted on the main scanning section 46, and the photosensitive material is pressed by the paper supply/ejection roller 46b.

On the sub-scanning section 47, an optical unit 47a is arranged opposite to the drum 46a. The optical unit 47a can be moved in parallel with the drum shaft by the moving mechanism (not illustrated; e.g. traveling belt, guide rail, pulley and sub-scanning motor) constituting the sub-scanning section 47. In response to the digital image signal, the optical unit 47a allows optical beams to be applied to the photosensitive material adsorbed by the drum 46a so that the image is written. A LED47R as a light source constituting the red LED unit, LED47G as a light source constituting the green LED unit, and LED47B as a light source constituting the blue LED unit are arranged on the optical unit 47a. Optical beams coming from the LED47R, LED47G and LED47B allow the image exposed to the photosensitive material on the drum 46a from the condensing lens 47h through mirrors 47e, 47f and 47g. An exposure shutter 47i is opened and closed by an exposure solenoid 47j, whereby an optical path is opened or closed at the time of start or termination of exposure.

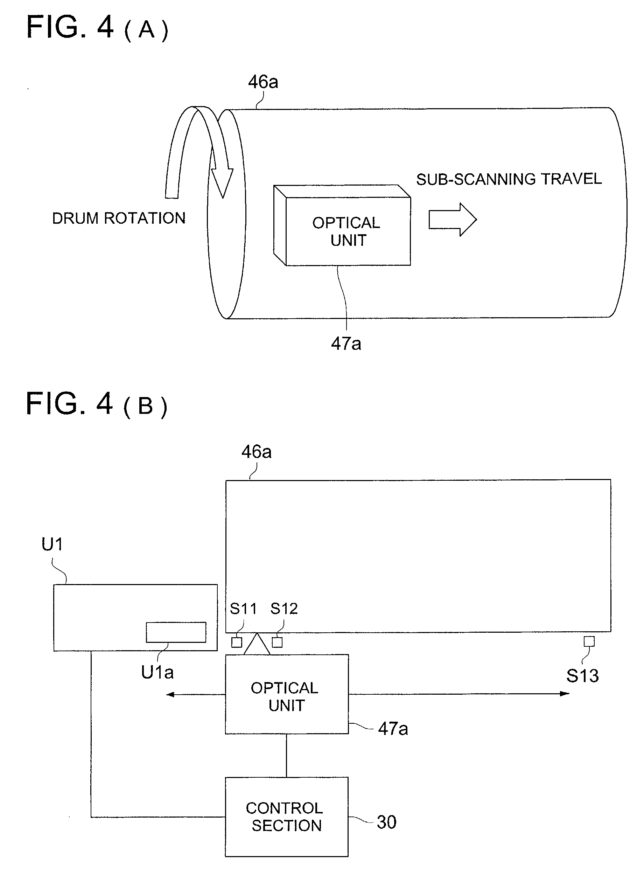

A sub-scanning reference position sensor S11, a sub-scanning writing position sensor S12 and a sub-scanning overrun position sensor S13 (all not illustrated) are arranged in the direction of a drum shaft of the optical unit 47a. The optical unit 32 is stopped when the sub-scanning reference position sensor S11 has sensed the sub-scanning reference position. Sub-scanning starts at this sub-scanning reference position, and is stopped when the distance corresponding to the image size has been traveled. Then the device goes back to the above-mentioned sub-scanning reference position, thereby completing the sub-scanning procedure. In other words, as shown in Fig. 4(A), sub-scanning is carried out by the optical unit 47a traveling in the axial direction of the drum 46a.

As shown in Fig. 4(B), the light measuring unit U1 for measuring the amount of light exposure from the light source has a beam measuring device U1a for measuring the beam wherein the optical beams emitted from the optical unit 47a is located inside. It is arranged at a position where the amount of light exposure of each light source from the optical unit 47a can be measured (e.g. at a position approximately as high as the optical unit and very close to the surface of the optical unit 47a where the measured surface faces the rotary shaft of the drum 46a). The control section 30 operates in such a way that the data on the amount of light exposure measured by the beam measuring device Utah of the light measuring unit U1 corresponds to a specific light source inside the optical unit 47a. The result of this measurement is stored in a predetermined area of the storage section 18 connected to the control section 30. There is a difference depending on whether light is measured at the time of the apparatus booting or at a periodic time interval.
This explanation as well as explanation of correction operation will be given in the subsequent description of "Configuration Characteristic of Embodiments according to the Present Invention". So they will not be described here to avoid duplication.

A paper ejection section 48 ensures that the photosensitive material where writing has terminated is separated from the drum 46a and is sent to the developing unit 50. In this case, if the feed speed of the developing unit 50 is lower than the ejection speed of the exposure unit 40, the photosensitive material is fed to the accumulation section 49 with the ejection speed kept higher. The photosensitive material is accumulated so as to hang over the accumulation section 49, and feeding is synchronized with the developing unit 50 to ensure that the processing capability of the exposure unit 40 will not deteriorate.

### (Configuration of optical unit)

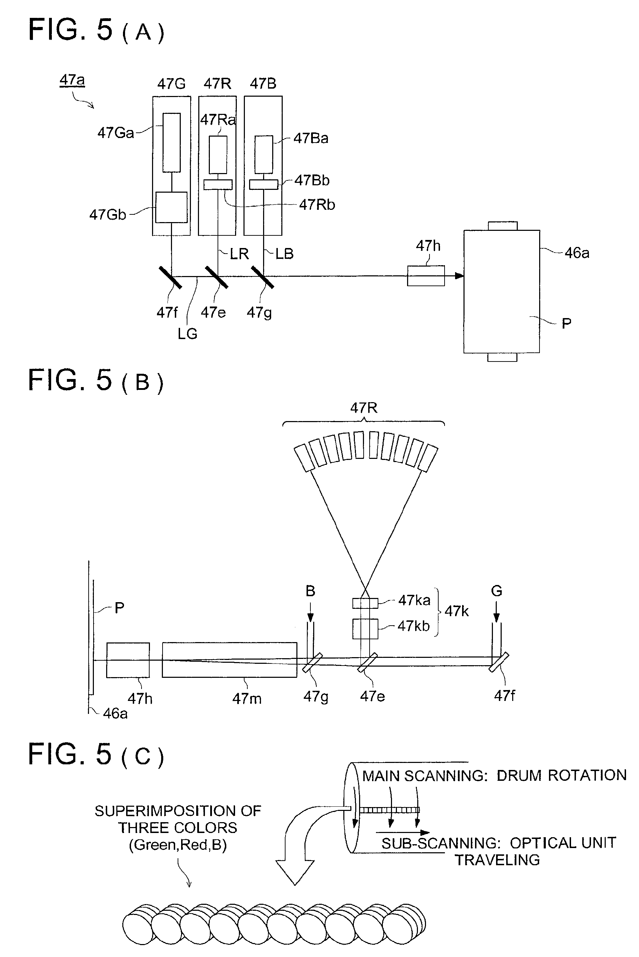

An example of the configuration of optical unit 47a will be described with reference to Fig. 5. As shown in Fig. 5, the optical unit 47a comprises a LED47R as a red light source, LED47G as a green light source, and LED47B as a blue light source. The LED47G emits green light allows the magenta color producing layer (M layer) of the photosensitive material to be exposed to light. The LED47R emits red light allows the cyan color producing layer (C layer) of the photosensitive material to be exposed to light. The LED47B emits blue light allows the yellow color producing layer (Y layer) of the photosensitive material to be exposed to light.

The LED47G has a green light source 47Ga and a modulation means 47Gb for modulating the light intensity in response to the modulation signal, and the LED47R has a red light source 47Ra and a modulation means 47Rb. In the same manner, the LED47B has a blue light source 47Ba and a modulation means 47Bb.

As described above, the LED47G, LED47R and LED47B are designed to modulate the light intensity in conformity to modulation signal (image output signal). They are configured to issue beams of three wavelengths, green G, red R and blue B, respectively to allow the CMY layers of the photosensitive material to be exposed to light. It is preferred that the modulation means be an acousto-optical modulation element, for example.

Optical beams with light intensity modulated are projected on the photosensitive material P fixed on the drum 46a, by the condensing lens 47h through mirrors 47e, 47f and 47g. The drum 46a is designed to be driven and rotated about the rotary shaft. This operation permits main scanning to be performed, while optical unit 47a is driven in the direction parallel to the rotary shaft of the drum 46a.

In the example given in Fig. 5(A), for ease of explanation, description is made for the case where exposure and scanning are performed by one beam for each wavelength. In the present embodiment of the present invention, however, exposure and scanning are performed by multiple beams for each wavelength, as shown in Fig. 5(C).

To put it more specifically, as shown in Fig. 5(B), beam outgoing surfaces of multiple red diodes are arranged in a circular arc in the LED47R. Each red diode emits a beam with light intensity modulated in conformity to the image signal and the emitted beam enters the incident optical system 47k provided with a lens group 47ka and cylindrical lens group 47kb. The lens group 47ka ensures that multiple beams are parallel with one another, and the cylindrical lens group 47k adjusts the shape of each of the multiple beams that have been made parallel with one another by the lens group 47ka. Then beams enter the mirror 47e. Other LED47G and LED47B have the similar configuration as the above.

A reduction optical system 47m reduces the spacing among green beams, red beams and blue beams, and leads them to the condensing lens 46a so that image is formed on the photosensitive surface of the photosensitive material P.

### (Configuration of the control system of image recording apparatus)

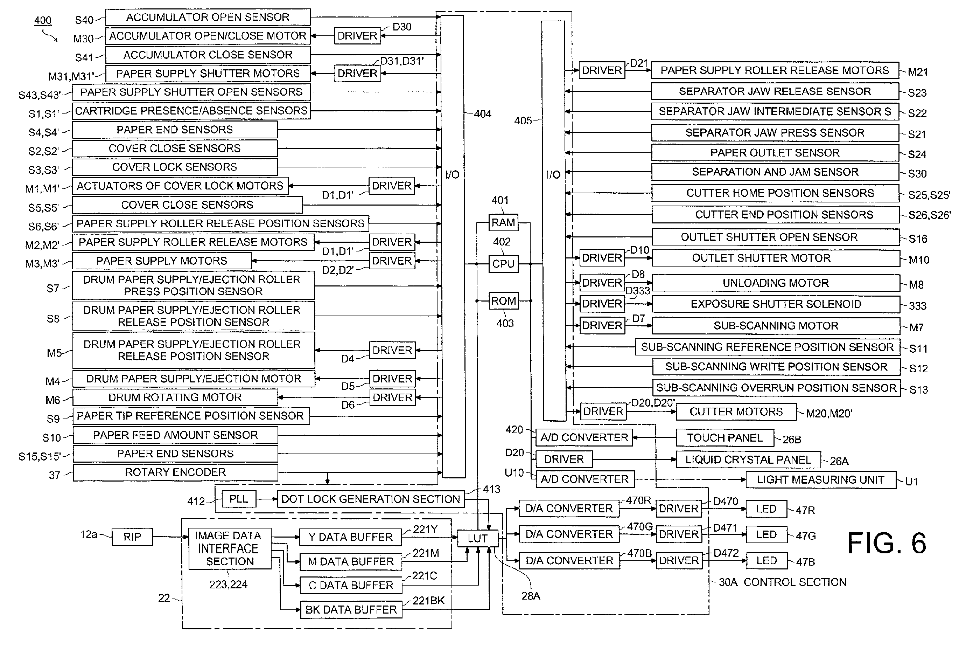

Referring to Fig. 6, the configuration of the control system of the image recording apparatus 20 (color proof creating apparatus) will be described.

As shown in Fig. 6, a control system 400 comprises: a LUT section 28A contained in the storage section 28 containing a group of various LUTs including the LUT for ensuring that each color component of the image data from the temporary information storage section 22 storing the dot image data from the RIP12a or the like is changed into the light intensify of each light source of the set channel; sections (sensors and an actuator group) constituting the exposure unit 40; and a control section 30 for controlling them.

The control section 30 is provided with a CPU401, RAM402 and ROM403 are connected to the sensors and actuator groups through the I/O ports 404 and 405. It controls the actuator group according to the information sent from the sensors.

The ROM403 stores the data for initializing various devices in the apparatus and the RAM402 stores the initial value intrinsic to the apparatus and data on correction value.

The following sensors are connected; cartridge presence/absence sensors S1 and S1' cover close sensors S2 and S2', cover lock sensors S3 and S3', paper end sensors S4 and S4', paper supply roller press position sensors S5 and S5', paper supply roller release position sensors S6 and S6', drum paper supply/ejection roller press position sensor S7, drum paper supply/ejection roller release position sensor S8, paper tip reference position sensor S9, paper feed amount sensor S10, sub-scanning reference position sensor S11, sub-scanning write position sensor S12, rotary encoder 37, sub-scanning overrun position sensor S13, paper end sensors S15 and S15', outlet shutter open sensor S16, separator jaw press sensor S21, separator jaw intermediate sensor S22, separator jaw release sensor S23, paper outlet sensor S24, cutter home position sensors S25 and S25', cutter end position sensors S26 and S26', separation and jam sensor S30, accumulator open sensor S40, accumulator close sensor S41, and paper supply shutter open sensors S43 and S43'.

The following group of actuators are connected; actuators of cover lock motors M1 and M1', paper supply roller release motors M2 and M2', paper supply motors M3 and M3', cutter motors M20 and M20', drum paper supply/ejection motor M4, drum paper supply/ejection roller press/release motor M5, drum rotating motor M6, sub-scanning motor M7, exposure shutter solenoid 333, unloading motor M8, outlet shutter motor M10, separator jaw motor M21, accumulator open/close motor M30 and paper supply shutter motors M31 and M31'. They are each driven through drivers D1, D1', D2, D2', D3, D3', D20, D20', D4, D5, D6, D7, D333, D8, D10, D21, D30, D31 and D31'.

A liquid crystal panel 26A is controlled by the driver D20, and the operation status of the image recording apparatus is displayed by the display section 26. The command given by the operation of the touch panel 26B is sent to the CPU 401 by the analog-to-digital converter 420 as digital information.

The display section 26 is provided with the liquid crystal panel 26A and touch panel 26B. It is an input means for inputting information for various settings and operations installed on the outer surface of the apparatus proper 20a, and is also a display means for displaying the status of the apparatus and various types of information. This display section 26 may be composed of a display means consisting of other LEDs and an input means consisting of input keys. Various settings and changes can be made by the operator entering commands from this display section 26.

In the control system 400 configured as described above, the following operations are performed: Digital image data is sent to the data buffer 221 (221Y, 221M, 221C and 221Bk) from the RIP 12a connected to the outside through the image data interface section 223. In the meantime, synthesized with the output signal of the PLL 412 based on the photosensitive material feed information from the rotary encoder 37, digital image information is supplied to the drivers D470, D471 and D472 by the dot clock of a dot clock generation section 413 from a data buffer 221 through the LUT (look-up able) 414 and digital-to-analog converters 470R, 470G and 470B. The LED 47R of the red LED unit, the LED 47G of the green LED unit and the LED 47B of the blue LED unit are each driven by these drivers D320 D321 and D322.

The dot image data of colors (C, M, Y and BK) created by the RIP 12a is forwarded to the image data interface section 223, where data is changed from the raster image format to the exposure format for each of several scanning lines of each color and is stored in the data buffers 221 (221Y, 221M, 221C and 221Bk).

When ten scanning lines of each color are to be scanned, for example, this conversion of the image data format is carried out by rearranging the image data of the bit map data in the raster image format and by reading out 10 lines in parallel.

After digital dot image data corresponding to one sheet is stored in the data buffer 221, simultaneous exposure of all colors is In this case, as shown below.

After dot image data corresponding to one sheet is stored in the data buffer 221, the fluctuation of transfer speed is accumulated by the data buffer 221. During this time, the image data of the data buffer 221 is read simultaneously for all colors by the dot clock generated by a dot clock generation section 413 and is sent to the LUT section 28A.

The LUT section 28A stores the data on the LUT (Lookup Table) defining the correspondence between colors reproduced by exposure, i.e. Y (yellow), M (magenta), C (cyan), B (blue), G (green), R (red), GY (gray), W (white) and BK (black), and strength composition of the light of the light source for each of these reproduced colors, i.e. R (red), G (green) and B (blue). The digital dot image data of Y, M, C and BK in the exposure format having been sent is converted into the exposure intensity data of R, G and B.

In this case, the dot image data of the Y, M, C and BK of the print is converted into a combination of the light intensity of the LEDs R, G and B for each pixel. Based on the information on the tip position of the photosensitive material derived from sensors, and the count of the pulse signals coming from the rotary encoder (not illustrated) for detecting the drum position, the CPU 401 of the control section 30a determines whether or not the image recording area of the photosensitive material is present at the position radiated with the LED light emitted from the optical unit. While the image recording area of the photosensitive material is present at the position radiated with the LED light, LEDs 47R, 47G and 47B are made to emit light by the exposure intensity data to be input into the drivers D470, D471 and D472 for driving the light sources, i.e. LEDs 47R, 47G ad 47B, and the dot image for the photosensitive material stored on the drum is output, whereby simultaneous full-color exposure is performed.

Further, the control section 30a allows the amount of light exposure of the LEDs 47R, 47G ad 47B to be measured by the light measuring unit U1 at the time of the apparatus booting before exposure or at a periodic time interval in such a way that correction can be performed with the result of this measurement reflected therein. Then the data of each LUT in the LUT section 28A is rewritten.

Based on the LUT (Lookup Table) data stored in the LUT section 28A, the amount of light exposure of the LEDs 47R, 47G ad 47B is adjusted by controlling the drivers D470, D471 and D472, whereby exposure of the photosensitive material is performed.

In this case, each modulation data item for modulating the light intensity is digital-to-analog converted by the digital-to-analog converters 470R, 470G and 470B, and is amplified by the drivers D470, D471 and D472. Then it is supplied to the LEDs 47R, 47G ad 47B and is modified.

### (Configuration characteristic of the embodiment of the present invention: Configuration for light intensity correction operation by light measuring unit)

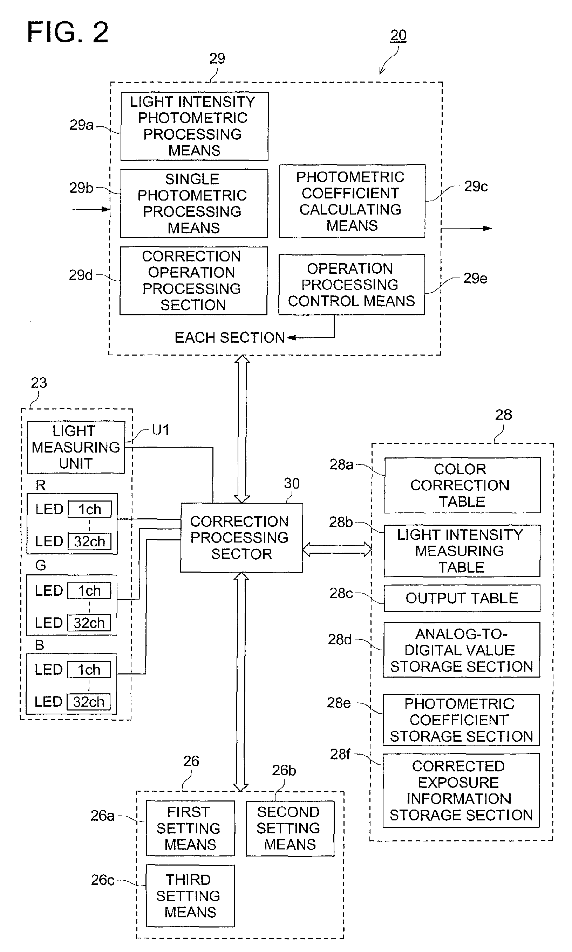

The configuration characteristic of the embodiment of the present invention will be descried with reference to Fig. 2. Fig. 2 is a functional block diagram representing the details of part of the image recording apparatus.

The following describes the further detailed configuration of the exposure section 23, storage section 28, correction processing section 29 and display section 26.

As shown in Fig. 2, exposure section 23 consists of each light source of R, G and B, and a light measuring unit U1. Light sources of the same color are provided in multiple numbers, e.g. 32 light sources of the same color are arranged.

As shown in Fig. 2, the storage section 28 comprises: a color correction table 28a defining the amounts of light exposures (for R, G and B) in conformity to the reproduced colors (C, M, Y, R, G, B, W and BK); a light intensity measuring table 28b where the amount of light exposure of each R, G and B measured by the light measuring unit U1 when each of the R, G and B light sources is exposed by image output signals of all gradations for each gradation (e.g. ten bits ranging from 0 to 1023) (at the time of apparatus booting or after the lapse of a predetermined time interval) is recorded for each gradation (0 to 1023: the gradation values from 0 to 1023 may hereinafter be referred to as LUT values); an output table 28c defining the values in conformity to the reproduced color (C, M, Y, R, G, B, W and BK) of the color correction table 28a using the gradation value (LUT value) of the light intensity measuring table 28b; an analog-to-digital value storage section 28d by single exposure memorized as a light intensity value prior to exposure when the light intensity is measured by the single exposure (at least one gradation (LUT value) of a specific gradation from the multi-scale image output signals is selected and the light source is made to emit light) prior to exposure; a photometric coefficient storage section 28e for storing the photometric coefficient calculated according to the single analog-to-digital value corresponding to the above-mentioned specific LUT value due to single photometry, and the analog-to-digital value corresponding to the above-mentioned specific LUT value of light intensity measuring table 28b; and a corrected exposure information storage section 28f for storing the corrected exposure information used for correction of the amount of light exposure in the color correction table 28a according to the photometric coefficient.

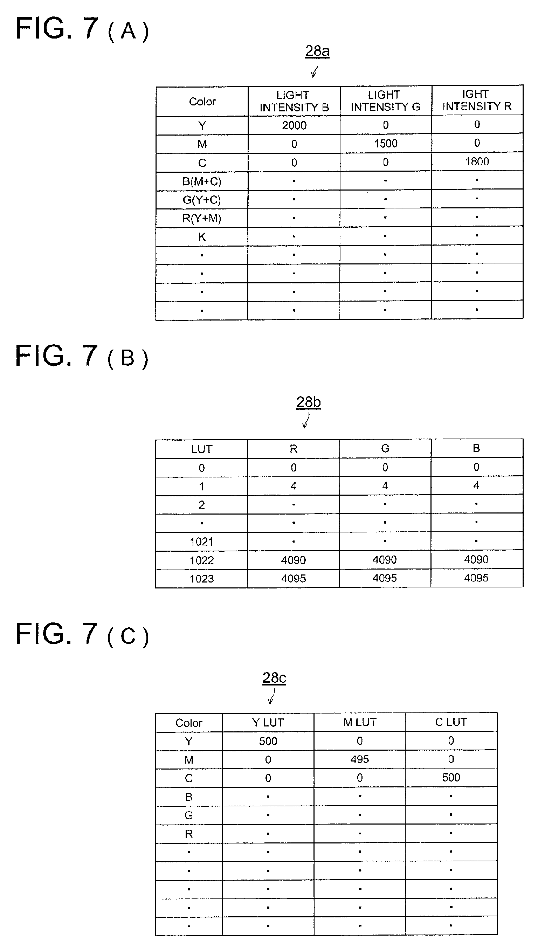

The color correction table 28a as one of the LUT sections in the storage section 28 is intended to designate the level of light intensity for exposing the combination of Y, M, C and K plates. As shown in Fig. 7(A), it provides the LUT (Lookup Table) data for defining the correspondence between the reproduced colors, i.e. Y (yellow), M (magenta), C (cyan), B (blue), G (green), R (red), GY (gray), W (white) and BK (black), and the amount of light exposure (R, G and B light intensities) of each R, G and B light sources with respect to each of these reproduced colors.

It is also preferred to prepare a channeled table for each type of the photosensitive material, for example, "glossy" and "matt", etc. or for each type and brand of ink, and to use it on a selective basis as required.

Light intensity measuring table 28b is a table for storing the light intensity value measured in terms of image output signals. As shown in Fig. 7(B), it records the measured light intensity values of the R, G and B light sources in conformity to each gradation value (LUT value).

When there are multiple light sources for one color, tables 1 through 32 in conformity to the number of these light sources (e.g. 32) are prepared in a channeled form.

The output table 28c is a table created by converting the color correction table 28a into the form of LUT values as image output signals. As shown in Fig. 7, it defines the colors reproduced by exposure, i.e. Y (yellow), M (magenta), C (cyan), B (blue), G (green), R (red), GY (gray), W (white) and BK (black), and YLUT value, MLUT value and CLUT value with respect to each of these reproduced colors. Before correction, the LUT values of the light intensity measuring table 28b corresponding to the light intensity values of the color correction table 28a are defined. These LUT values define the magnitude of the drive current required to perform exposure output of the light source (as image output signals), whereby actual exposure is performed.

When there are multiple light sources for one color, tables 1 through 32 in conformity to the number of these light sources (e.g. 32) are prepared in a channeled form.

The display section 26 contains: first setting means 26a for setting the amount of light exposure and channels in the color correction table 28a; second setting means 26b for referring to or changing the setting of the measured light intensity value and LUT value in the light intensity measuring table 28b; and third setting means 26c for referring to or changing the setting of the LUT values of the output table 28c.

The correction processing section 29 contains: a light intensity photometric processing means 29a that allows the light sources to be lighted by the image output signals of all gradations (gradation values) at a periodic time interval and at the time of the apparatus booting before exposure, wherein the measured exposure for each gradation as a result of measurement by the light measuring unit U1 is created and processed as the above-mentioned light intensity measuring table 28b; and a single photometric processing means 29b that selects at least one specific gradation value (LUT value) from multi-scale image output signals (gradation values) prior to image exposure, and causes light source to emit light at the above-mentioned specific LUT value so that the light intensity value (analog-to-digital value by single photometry) prior to exposure as a result of misusing this light (single measurement) by the light measuring unit U1 is stored in the analog-to-digital value storage section 28d by single photometry.

Further, the correction processing section 29 contains: a photometric coefficient calculating means (light intensity error coefficient calculating means) 29c for calculating the photometric coefficient based on the single analog-to-digital value corresponding to the specific LUT value of the analog-to-digital value storage section 28d and the analog-to-digital value corresponding to the above-mentioned specific LUT value of the light intensity measuring table 28b in the storage section 28, and for storing the result in the photometric coefficient storage section 28f of the storage section 28; a correction operation processing section 29d for processing the correction operation of the above-mentioned light intensity based on the photometric coefficient of the photometric coefficient storage section 28e and the amount of light exposure on the color correction table 28a; and operation processing control means 29e for control the proper sequence of operations in each section and selection of only the required operations to be performed.

A "light measuring unit" as an embodiment of the present invention enables the "light measuring means" according to the present invention to be configured. "Light intensity measurement processing means" as an embodiment of the present invention allows the "first light intensity measurement processing means" according to the present invention to be configured. Further, "single photometric processing means" as an embodiment of the present invention allows the "second light intensity measurement processing means" according to the present invention to be configured. The "correction operation processing means" and "operation processing control means" as embodiments of the present invention permits the "light intensity correction means according to the present invention to be realized.

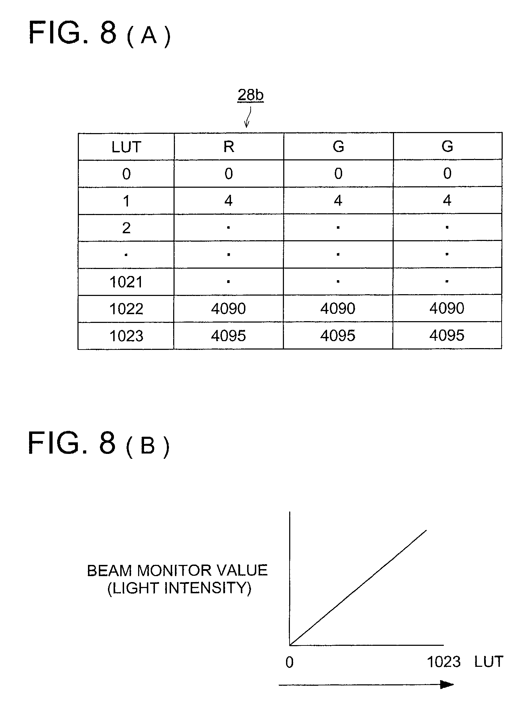

As shown in Fig. 8(A), the light intensity photometric processing means 29a processes the operation to as to create the light intensity measuring table 28b. It changes the LUT value output to each driver of each LED in the range from 0 to 1023 and allows light intensity to be measured by a beam monitor, etc. Photometry is provided by the channel of each light source.

When the step of measurement is selected, a value is generated by interlinear interpolation (Fig. 8(B)). Beam measuring control method is provided by the beam monitor control task.

If measurement of one beam is assumed to take 5 msec., then 5 x 32 channels x 1,024 x 3 colors. The total time for beam measurement is 8.2 msec. for one step and 4.1 min. for two steps.

As described above, the light intensity photometric processing means 29a (first light intensity photometric processing means allows the above-mentioned light sources to emit light according to the image output signals of all gradations, thereby calculating light intensity values for each gradation when light is measured by the above-mentioned light measuring means.

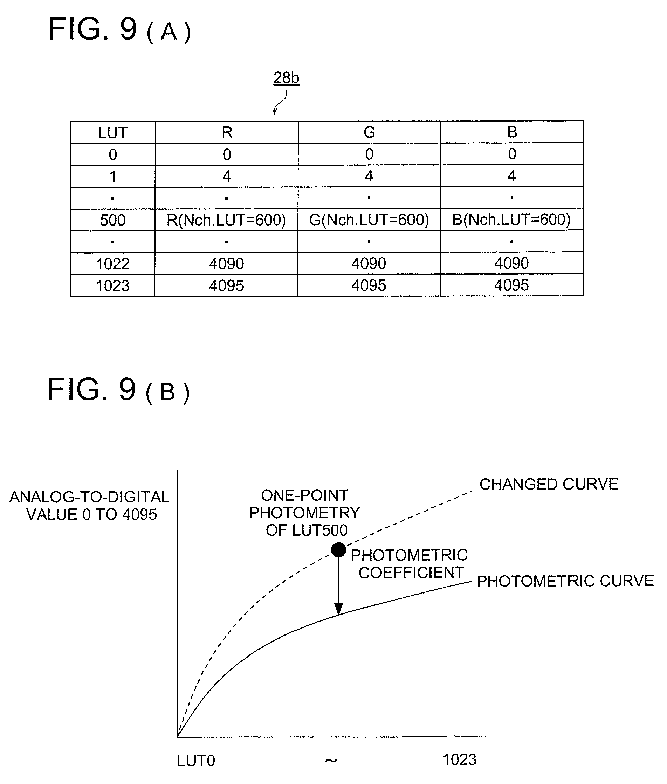

The single photometric processing means 29b causes beam measurement to be performed before exposure output. As shown in Fig. 9(A), RGB x 32 channels are subjected to single photometry at a specific LUT value of LUT500, for example, and the analog-to-digital value is stored. This value is stored as a "single light-up analog-to-digital value >" in the case of "Rsingle (Nch, LUT = 500) < Red Nch LUT = 500", for example.

When the analog-to-digital value has been detected as "0", a light intensity error occurs. If the amount of data that can be stored is 19.2 Kbytes, then RGB x 32 channels x 2 bytes x 100 data items. This makes it possible to configure an arrangement capable of storing about 100 analog-to-digital data items of the past.

As described above, the single photometric processing means 29b (second photometric processing means) selects at least one specific gradation from image output signals of multi-scale gradation before the image is exposed, causes the light sources to emit light according to the above-mentioned specific gradation, and calculates the pre-exposure light intensity value at the time of measuring one dot by the above-mentioned light measuring means.

The photometric coefficient calculating means 29c extracts the above-mentioned specific LUT value (e.g. a value corresponding to LUT 500). In the example given in Fig. 9(A), the analog-to-digital values of the LUT = 500 in the light intensity measuring table are R (Nch, LUT = 500), G (Nch, LUT = 500) and B (Nch, LUT = 500).

Processing is performed to calculate a photometric coefficient by comparison between the analog-to-digital values of the LUT 500 in pre-exposure single photometry, i.e. Rsingle (Nch, LUT = 500) and R (Nch, LUT = 500).

Here the photometric coefficient Rk (Nch) is defined as Rk (Nch) = R (Nch, LUT = 500)/Rsingle (Nch, LUT = 500), for example, and calculation is made according to this definition. It should be noted, however, that calculation is made for RGB x 32 ch in the case of (N = 0 through 32 ch).

As described above, the photometric coefficient calculating means 29c calculates the error of light intensity resulting from photometry as photometric coefficient, based on the pre-exposure light intensity value and the above-mentioned light intensity value.

The correction operation processing section 29d performs correction operation for the image output signal at the time of exposure of the above-mentioned image, based on the photometric coefficient calculated by the photometric coefficient calculating means 29c, whereby operation is made to correct the light intensity. In this manner as shown in Fig. 9(B), photometric coefficient is calculated from the analog-to-digital value (measured value) by pre-exposure one-dot measurement and the above-mentioned LUT value of the photometric curve. Thus, the misalignment of the light intensity of the light source in all gradations is corrected by the photometric coefficient.

To put it more specifically, correction light intensity value is calculated according to the calculated photometric coefficient, and the values LUT from 0 through 1023 are rewritten by the correction light intensity value. The output table 28c is rewritten by the correction LUT value corresponding to the correction light intensity value of the light intensity measuring table 28b. It should be noted, however, that, if the result of correction operation exceeds 4095, 4095 is used.

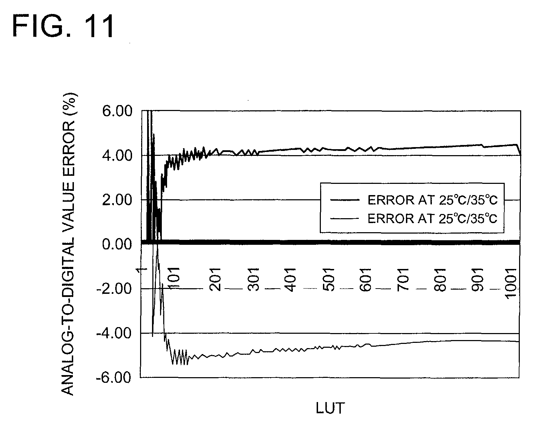

As shown in Fig. 11, the error of light intensity is constant, except for the low light intensity portion characterized by a low LUT value. This permits one-dot correction to be performed, even if image signal (gradation value or LUT value) is increased from 0 to 1023.

However, use of multiple scales is preferred since the error in the low light intensity portion becomes larger. In other words, the operation processing control means 29e is preferred to provide control in such a way that one scale is selected for the intermediate density portion (intermediate light intensity portion) and the multi-scale gradation value for the low density portion (low light intensity portion), and the light intensity is allowed to emit light according to these gradation values, whereby measurement for correction is performed. This reduces the impact of an error in the low density portion (low light intensity portion).

In this case, it is preferred that the second light intensity measurement processing means be provided, and at least one specific gradation corresponding to the intermediate light intensity portion and the multiple gradations corresponding to the portion of light intensity lower than that of the above-mentioned intermediate light intensity portion from the multi-scale gradation image output signals are selected before exposing the above-mentioned to light. It is preferred that the light sources be made to emit light according to each of the above-mentioned gradations, and pre-exposure light intensity value when measured by the light measuring unit be calculated.

### (Operation in the configuration for light intensity correction)

The following describes the process of adjusting the light intensity in an image recording apparatus having the above-mentioned configuration.

In the control system of the image recording apparatus 20 having the above-mentioned configuration, the color correction table 28a and output table 28c are loaded in the storage section 28.

In the operation processing control means 29e of the correction processing section 29, control is provided so that processing is performed by light intensity photometric processing means 29a, single photometric processing means 29b, photometric coefficient calculating means 29c and correction operation processing section 29d in that order.

To put it more specifically, at a periodic time interval or at the time of the apparatus booting, the light intensity photometric processing means 29a causes the light source to emit light by the image output signal of all gradations (gradation value). The measured amount of light exposure for each gradation as the result of measuring this light with the light measuring unit Ul is created and processed as the light intensity measuring table 28b.

In this case, the LUT value output to the drive of each LED is changed from 0 to 1023 to measure the light intensity with a beam heater or the like. Light is measured by the channel of each light source.

In the meantime, before exposure output, the single photometric processing means 29b selects at least one specific gradation value (LUT value) from the multi-scale image output signal (gradation value), and causes the light source to emit light at the above-mentioned specific LUT value. Processing is performed so that pre-exposure light intensity value (analog-to-digital value by single photometry) as the result of measuring this light with the light measuring unit U1 is stored in the analog-to-digital value storage section 28d by single photometry of the storage section 28.

As shown in Fig. 9(A), RGB x 32 channels are subjected to single photometry at a specific LUT value of LUT500, for example, and the analog-to-digital value is stored as Rsingle (Nch, LUT = 500).

Then the photometric coefficient calculating means 29c works out the photometric coefficient based on the single analog-to-digital value corresponding to the specific LUT value of the analog-to-digital value storage section 28d by the single photometry of the storage section 28 and analog-to-digital value corresponding to the above-mentioned specific LUT value of the light intensity measuring table 28b of the storage section 28.

To put it more specifically, the value corresponding to the above-mentioned specific LUT value, for example, LUT 500 is extracted from the light intensity measuring table 28b. In the example given in Fig. 9(A), the analog-to-digital value of LUT = 500 in the light intensity measuring table is R (Nch, LUT value = 500), G (Nch, LUT value = 500) and B (Nch, LUT value = 500). The analog-to-digital value of the LUT 500 of the stored single photometry, i.e. Rsingle (Nch, LUT = 500) and R (Nch, LIT = 500) are compared with each other to work out the photometric coefficient.

In the embodiment of the present invention, photometric coefficient Rk (Nch) is defined as Rk (Nch) = R (Nch, LUT = 500)/Rsingle (Nch, LUT = 500), for example, and is worked out on the basis of it. In the case of (N = 0 through 32), calculation is made for BGR x 32 ch.

Based on the photometric coefficient worked out by the photometric coefficient calculating means 29c, the correction operation processing section 29d performs operations to correct light intensity.

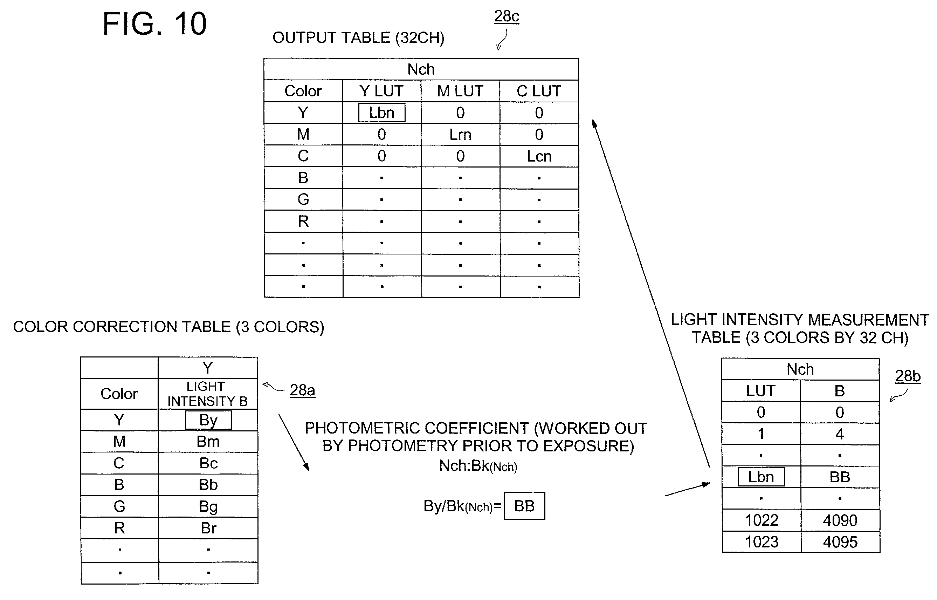

To put it more specifically, based on the photometric coefficient Bk obtained as shown in Fig. 10, the color correction table 28a is used to work out the correction light intensity value BB. The LUT 0 through 1023 of the light intensity measuring table 28b is rewritten by the correction light intensity value BB. The output table 28c is rewritten by the correction LUT value Lbn for the correction light intensity value BB of the light intensity measuring table 28b having been rewritten. This allows the corrected image output signal to be issued from the output table 28c at the time of actual exposure, whereby stable exposure is performed.

Turning back to the description of Fig. 2, information on the color correction table 28a (color channel color correction LUT) can be set and entered by the first setting means 26a to adjust colors. In this case, the type of paper and channel (ch) is specified in the color correction table 28a using a special-purpose software tool such as color control means.

To put it more specifically, when a predetermined key on the touch panel is pressed on the initial menu screen of the liquid crystal panel, the color correction setting screen (containing the LUT data of a channel (e.g. channel 1) and numeric keypad will appear. The numeral data on the color correction table 28a is a standard value by default.

On this screen, a desired reference color (reproduced color) is touched. The density value corresponding to it is changed using a numeric keypad, and the entry of the numeral is confirmed by pressing the Enter key. An incorrect numeral is cleared by a Clear key and a correct one is entered again.

After completing the control of all reference colors for each channel, the system is ready for color correction of the next channel. Color correction is performed for the next channel in the same manner if required. Upon termination of color correction, the menu key is pressed to go back to the initial menu screen.

As described above for the color correction table 28a, the density of dots on paper differs according to the type of the printing paper for the final print (e.g. art paper, coated paper, bond paper), type of the ink and printing conditions. So correction processing section 29 selects and extracts the current correction table as a specified color correction table (color correction LUT) by specifying the type of paper or channels (channelized ch), to be used in the above-mentioned correction operation.

### (Sequence of processing)

With reference to Figs. 12 through 15, the following describes the sequence of processing in the correction of the amount of light exposure of the image recording apparatus having the configuration described above.

As shown in Fig. 12, decision is made to determine whether or not a certain time has elapsed or the image recording apparatus has been booted (power turned on and warmed up) (Step (hereinafter referred to as "ST") 11). If it has been determined in this decision step that a certain time has elapsed or the image recording apparatus has been booted, then processing is performed by the light intensity measuring means (ST12).

If it has been determined in the decision step of ST11 that a certain time has not elapsed or the image recording apparatus has not been booted, then the system proceeds to ST13.

Then decision is made to determine if image exposure has started or not (ST13). It has been determined in the ST13 that image exposure has not started, and then ST13 is repeated.

If it has been determined in the decision step of ST13 that image exposure has started, processing is performed by single photometric processing means (ST14).

The above operation is followed by processing by photometric coefficient calculation means (ST15) and then by correction operation (ST16).

Image exposure output is performed according to the corrected amount of light exposure (ST17).

### (Processing in ST14)

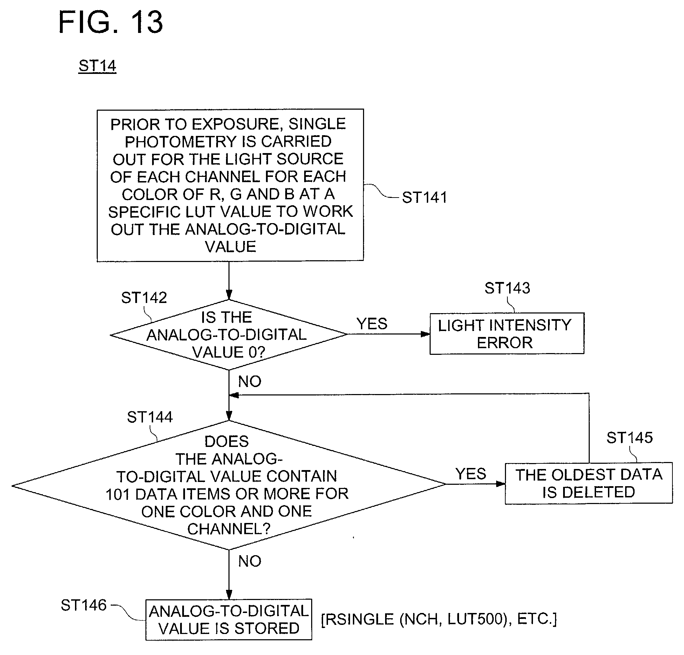

Processing of the above-mentioned ST14 will be described in greater details with reference to Fig. 13: Here prior to exposure, single photometry is carried out for the light source of each channel for each color of R, G and B at a specific LUT value to work out the analog-to-digital value (ST141).

In this case, decision is made to determine if the analog-to-digital value is 0 or not (ST142). If it has been determined that the analog-to-digital value is 0 in the decision of ST142, a light intensity error will occur (ST143). If it has been determined that the analog-to-digital value is not 0 in the decision of ST142, the system proceeds to ST144.

Decision is made in ST144 to determine whether or not the analog-to-digital value contains 101 data items or more for one color and one channel (ST144). If it has been determined in the decision of ST144 that the analog-to-digital value contains 101 data items or more, the oldest data at that time is deleted (ST145) and the ST141 is repeated. This allows the unoccupied area to be formed.

If it has been determined in the decision of ST144 that the analog-to-digital value does not contain 101 data items or more, there is an unoccupied area to store an analog-to-digital value. So processing is performed to store the analog-to-digital value worked out in the ST141.

A specific example of the analog-to-digital value in this case includes Rsingle (Nch, LUT500).

### (Processing in ST15)

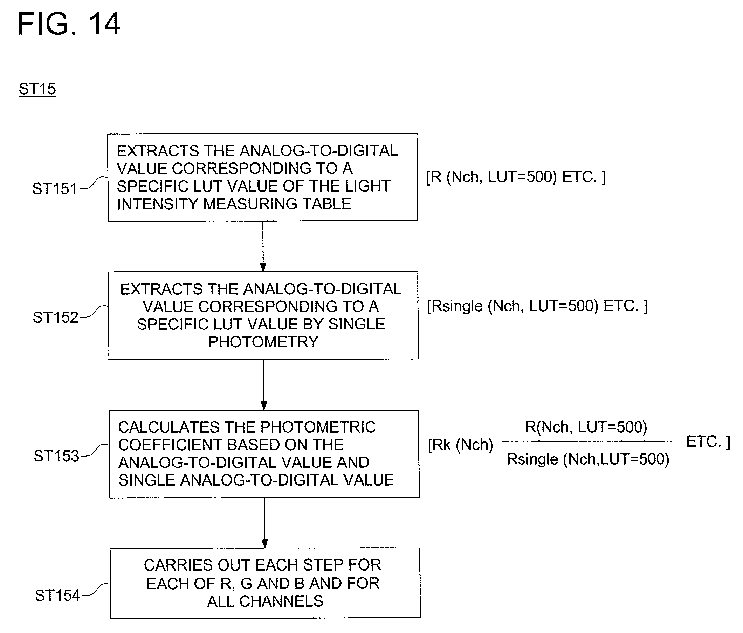

Processing of the above-mentioned ST15 will be described in greater details with reference to Fig. 14: As shown in Fig. 14, processing is carried out to extract the analog-to-digital value corresponding to a specific LUT value of the light intensity measuring table (ST151). For example, R (Nch, LUT = 500) is extracted.

This is followed by the process of extracting a single analog-to-digital value corresponding to the above-mentioned specific LUT value through single photometry (ST152). For example, Rsingle (Nch, LUT = 500) is extracted.

Then processing is carried out to work out the photometric coefficient according to the analog-to-digital value extracted in the ST151 and single analog-to-digital value extracted in the ST152 (ST153). Here if the photometric coefficient is defined as (photometric coefficient) = (analog-to-digital value)/(analog-to-digital value by single photometry), then photometric coefficient is Rk (Nch) = <R (Nch, LUT = 500)>/<Rsingle (Nch, LUT = 500)>.

The above-mentioned steps are performed as described above. Further, these steps are carried out for each of R, G and B and for all channels (S154).

### (Processing in ST16)

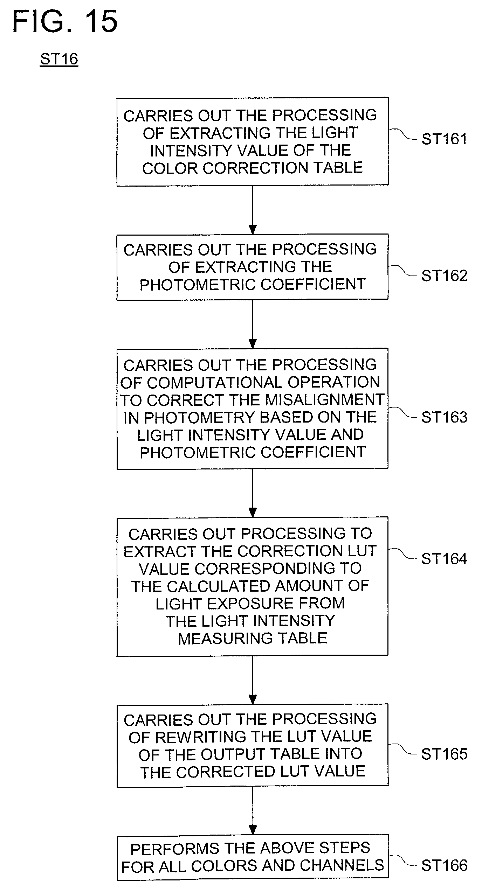

Processing of the above-mentioned ST16 will be described in greater details with reference to Fig. 15: As shown in Fig. 15, processing is carried out to extract the light intensity value of the color correction table (ST161).

This is followed by the process of extracting the photometric coefficient (ST162).

Then computational operation is performed to correct the misalignment in photometry according to the above-mentioned light intensity value and photometric coefficient (ST163).

Further, processing is carried out to extract the correction LUT value corresponding to the calculated amount of light exposure from the light intensity measuring table (ST164).

Then processing is carried out to rewrite the LUT value of the output table into the correction LUT value. In this manner, the above-mentioned steps are performed for all colors and channels (ST166).

According to the embodiment of the present invention as described above, when light intensity of the LED is changed by environmental changes or secular changes, the light intensity of only one-scale output modulation signal of multi-scale output modulation signals is measured, and all output light intensities are corrected. This allows only the image output signal (gradation value) of one dot to be measured, and permits correction operation to be carried out for all light intensities, with the result that operation time is reduced and high-precision correction of light intensity is provided in a shorter time. In particular, this feature ensures a short-time correction in the case of increased number of the light sources for multiple means, and provides a stable image density output.

### [Second Embodiment]

The following describes a second embodiment of the present invention. To avoid duplication, virtually the same configuration as that of the first embodiment will not be described. Only the differences will be described.

In the first embodiment, an example is disclosed where the photometric coefficient is defined as (photometric coefficient) = (analog-to-digital value)/(analog-to-digital value by single photometry). Without being restricted thereto, the photometric coefficient can be defined as (photometric coefficient) = (analog-to-digital value by single photometry)/(analog-to-digital value).

In this case, the table can be rewritten by multiplying the LUT 0 through 1023 of the light intensity measuring table by the calculated photometric coefficient. If the result of multiplication is 4095 or more, 4095 is used. For example, the result is R (Nch, LUT = X) = Rk (Nch x R (Nch, LUT = X) (N = 0 through 32 ch, X = 0 through 1023).

In order to correct the misalignment of measurements of the beam monitor with respect to the light intensity value of the color correction table, photometric coefficient is used to carry out a division. This allows the calculated LUT value to be extracted from the light intensity measuring table, and to be set on the output table. This operation is carried out for all channels. Upon setting the output data, the output data is copied to the LUT memory that is accessed from the hardware in the final stage. It is assumed that, although the LUT memory turns off after the power has been turned off, the output data is backed up.

The same advantages and effects as those of the first embodiment are provided according to the second embodiment of the present invention as described above.

### [Third Embodiment]

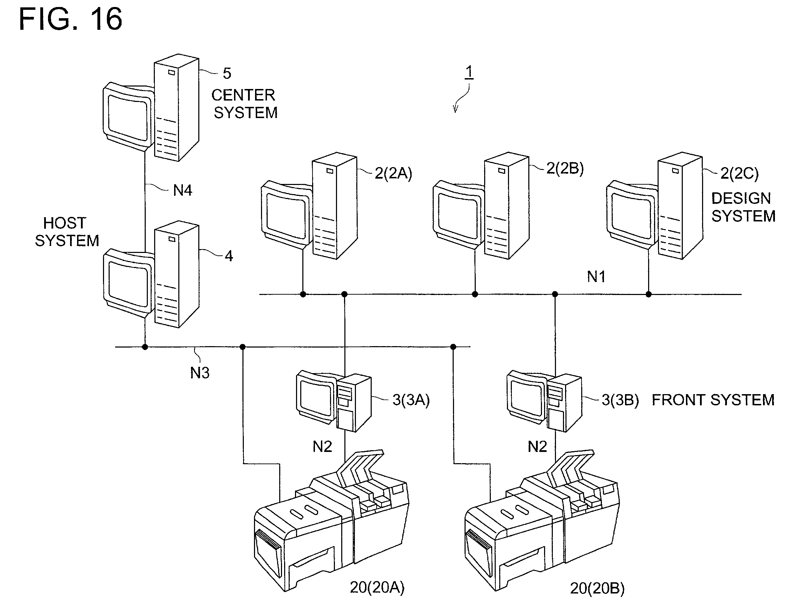

The following describes a third embodiment of the present invention with reference to Fig. 16. To avoid duplication, virtually the same configuration as that of the first embodiment will not be described. Only the differences will be described.

Fig. 16 is an explanatory diagram representing an example of the configuration of the entire color proof creating system as an embodiment of the present invention.

In the above-mentioned embodiments, operation processing in the image recording apparatus has been described. It is also possible to arrange the system in such a way that the above-mentioned correction operation is performed by the management apparatus configured to as to permit communications through a network, and the result of correction operation is transferred to the image recording apparatus to allow the table to be rewritten.

To put it more specifically, the approximate overall configuration of the color proof creating system will be described with reference to Fig. 16.

As shown in Fig. 16, the color proof creating system 1 of the present embodiment contains: multiple (e.g. three) upstream terminals 2 (1A, 2B and 2C) as information terminals having an image edit function for generating image data, these terminals being connected to the network N1; multiple (e.g. two) image processing apparatuses 3 (3A and 3B) having an image output control function, these apparatuses also being connected to the network N1; multiple (e.g. two) image recording apparatuses 20 (20A and 20B) connected with the image processing apparatuses 3 (3A and 3B) via the network N2 so as to communicate with each other; a sub-host 4 formed so as to communicate with the image recording apparatus 20 (20A and 20B) via the network N3, this sub-host providing various types of maintenance by acquiring, monitoring and remote-controlling various types of control information on the image recording apparatus 20; and a host 5 formed so as to communicate with the sub-host 4 through the network N4.

In the example of system configuration given in Fig. 16, a design system is formed by the above-mentioned upstream terminals 2 (2A, 2B and 2C), a front system by the image processing apparatuses 3 (3A and 3B), a host system by the sub-host and a center system by the host 5. Further, the upstream terminals 2, image processing apparatuses 3, sub-host 4 and host 5 are preferred to be composed of various types of PCs, servers or computers similar to them including information processing apparatuses. Image recording apparatuses 20 (20A and 20B) uses a DCP (Digital Color Proof) creating apparatus.

Further, it is preferred that networks N1, N2, N3 and N4 be composed, for example, of the Internet (or a form of communications mainly using a TCP/IP protocol), LAN for specific areas, WAN, serial communications or their communications. But these networks can contain various types of lines such as a cellular phone line network (including the base station and switching system), public line network, broadband-compatible lease line and cable TV line, as well as radio (including satellite communications) network. Further, it is possible to contain a network using other various types of communications protocol, or a system connected with other various networks. "communications network" as a generic name for the present invention consists of a combination of these networks N1, N2, N3 and N4.

The image recording apparatus 20 is assumed to contain tables characteristic of the embodiment of the present invention. It is also possible that only the image processing apparatus 3 has these tables, or the image processing apparatus 3 and image recording apparatus 20 have these tables. In this case, when multiple different types (models) of image recording apparatuses 20 are connected to one image processing apparatus 3, for example, although they are not illustrated, one image processing apparatus 3 may contain the above-mentioned table corresponding to each image recording apparatus 20.

The upstream terminals 2 (2A, 2B and 2C) each operate as computer terminal apparatuses. The upstream terminals 2 (2A, 2B and 2C) can adopt various types of hardware configuration in conformity to the system configuration. In the present example, this is not illustrated, in order to avoid complicated explanation. It is provided with a computer proper, a display such as CRT to be connected to the computer, mouse, keyboard, digitalizer, floppy disk drive apparatus and hard disk, as well as input equipment for image generation such as an image scanner.

The image processing apparatuses 3 is designed to ensure that the image data of the image edit file edited by the upstream terminal 2 is extended into the raster data through the network or an external input/output device such as floppy disk drive by RIP (Raster Image Processor) or the like. At the same time, the image processing apparatuses 3 processes dot image data generation to separate a plate and to generate data of each color plate (dot image data), and transfers the dot image data to the image recording apparatus 20, thereby outputting the image.

The image processing apparatuses 3 (3A and 3B) comprises a computer proper and display section (keyboard and other input equipment), and incorporates an operation program for receiving the image data and to outputting the job to the image recording apparatuses 20 (20A and 20B). The image processing apparatus 3 can be connected with a color scanner for reading the image document, a ground paper input device or galley proof printer for galley proof printing of lower quality as required, although they are not illustrated to ensure simple understanding of this invention.

The image recording apparatus 20 allows an image to be formed on the printing paper by the dot image data transferred from the image processing apparatus 3 and creates a color proof. The image recording apparatus 20 can be composed of an image forming apparatus such as color proofer based on a laser exposure method, etc. This permits the image data from the image processing apparatus 3 to be sent to the image recording apparatus 20 through the network N2, and permits the image data of each color to be recorded on the recording material (output medium: output paper, etc.), whereby a color proof is formed.

The image recording apparatus 20 is loaded with the software including the setting information for setting various types of tables and color corrections. It is configured to process correction operations, thereby correcting the light intensity resulting from environmental and secular changes, and producing a color proof of correct color tone.

It is preferred that system configuration be based on the example given in Fig. 16. Without being restricted to this configuration, it is also possible that one computer incorporates the functions of the image processing apparatus 3, sub-host 4, and host 5 (and upstream terminal 2) for the sake of expediency. In the following detailed description of individual items, an example is taken from the case where one computer is used as a "management apparatus" for ease of explanation. In other words, as shown in Fig. 4, explanation will be made using an example of the simplest system configuration where the management apparatus 10 and image recording apparatus 20 are formed through the network to as to communicate with each other.

### (Configuration and advantages of the management apparatus)

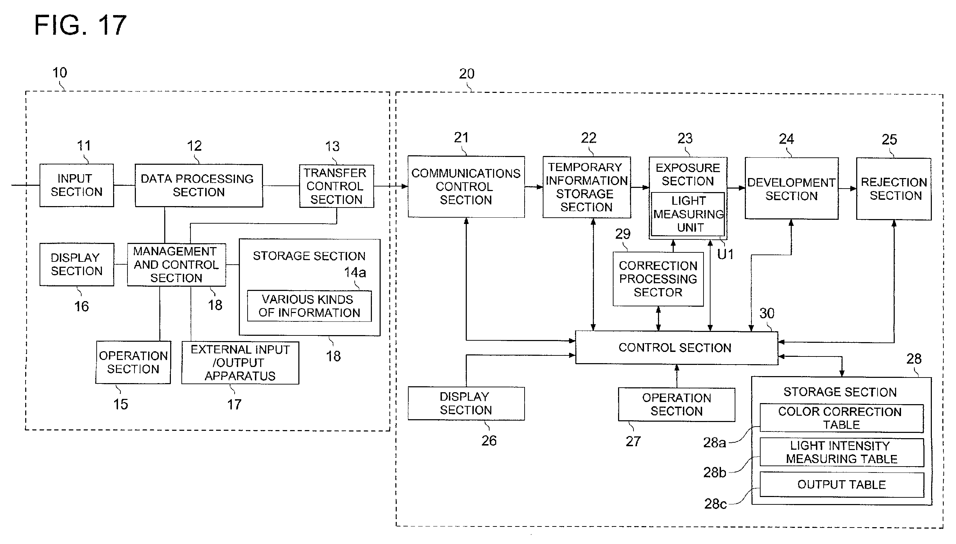

In Fig. 17, a specific example of functional components the management apparatus 10 and image recording apparatus 20 is represented as a functional block diagram. The configuration of the image recording apparatus 20 is the same as that in the first embodiment, so it will not be described to avoid duplication. It is preferred that the correction processing section 29 be not formed in the image recording apparatus 20. It is also possible to make arrangements such that the storage section 28 has only the output table 28c.

The management apparatus 10 works as a controller for controlling the image recording apparatus 20. As shown in Fig. 17, the management apparatus 10 includes: an input section 11 as an interface for entering the image data of the image edit file edited from the outside; a data processing section 12 for carrying out processing of the RIP function for generating the dot image data as each color plate data by expanding the image data entered from the input section 11 into a raster image or the like, and by separating the plate, wherein the data processing section 12, based on the dot image data and information of the storage section 14, also carries out various image types of image processing, operation processing, and various types of correction including the work done by of correction processing section and the like in the first embodiment; a storage section 14 such as hard disk for storing the image data, parameter setting conditions, various tables, other programs; a transfer control section 13 as a communications means consisting of an output interface for outputting, for example, the dot image data of the data processing section 12, for example, in the field sequence of C, M, Y and K, and transferring the data to the image recording apparatus 20 and controlling it; an operation section 15 for setting and entering various information items and setting conditions; a display section 16 consisting of a CRT and liquid crystal panel for displaying the screen or the like for setting various parameters such as LUTs of various types; an external input/output apparatus 17 such as a floppy disk drive; a management and control section 18 consisting of a CPU and others that control each of the data processing section 12, transfer control section 13, storage section 14, operation section 15, display section 16 and external input/output apparatus 17.

The image data such as page description language (PDL) including the color information of the image edit file from the upstream terminal 2 for editing that integrates and edits images such as characters and patterns is entered into the input section 11. The above-mentioned image data includes, in addition to the data composed of the above-mentioned page description language such as PS, EPS and PDF, the general-purpose format data such as TIFF and TIFF/IT, data handled by the major manufacturers as their proprietary format and similar data of various kinds.

The data processing section 12 uses the storage section 14 or the like to expand the entered PDL data into a raster image as a binary image data in conformity to predetermined conditions (e.g., dot form, dot angle, number of screen lines, gamma characteristics of photosensitive material and characteristics of developing equipment). Further, the data processing section 12 generates the dot image data by separating the plate.

Further, the data processing section 12 has the same functions as those of the correction processing section of the first embodiment.

The transfer control section 13 carries out processing so that the image data expanded and subjected to plate separation by the data processing section 12 is transmitted to the image recording apparatus 20. This allows image data of Y, M, C and K in the raster image format to be sent from the image data for electronic printing plate to the image recording apparatus 20 for each color sequentially (according to field sequence).

Reproduction is realized from the image data for electronic printing plate by a set of dots having the same number of screen lines as that of the print, where the amount of pixel gain is approximate to that of the print. This provides a faithful reproduction of the printed dot image. Here the dot is defined as a minute point created by a screened printing plate to reproduce a photograph and illustration having continuous gradation as a printed object. It uses the principle of visually recognizing the density by a set of minute points.

The storage section 14 consists of various types of memory areas such as an area for storing the entire control program for the OS and others of the management apparatus 10 itself, font data and control program for processing the color separation plate; an area as a work memory for temporary storage of the progress of processing; a PS file memory for storing the graphic file data including the color data described in the page description language (PDL data) such as post-script (PS); a color table memory for extracting the data of all colors from the files in the PS file memory and storing them; and a color separation plate file memory for storing the separation plate file for each color.

The storage section 14 contains various kinds of information 14a similar to those in various tables stored in the storage section 28 of the image recording apparatus 20 as an embodiment of the present invention.

The operation section 15 also serves as a display section 16. It can be set by entering data from the input key or the like as operation input means. Parameters set by pressing the key can be stored in the storage section 14.

The display section 16 displays the status of the image recording apparatus 20 and various information items. Information for various settings and operations can be set through the operation section 15. Parameters (set information) set through these operation section 15 and display section 16 contain information on output resolution, dot information, information on negative/positive setting, rotation require/not-require information, and table (LUT) information for adjustment of various colors in the case of the management apparatus 10.

The management and control section 18 reads the information on the image recording apparatus 20 set and stored in the storage section 14, and allows it to be displayed on the display section 16. It controls the data processing section 12 in such a way that the dot image data generated by the data processing section 12 is subjected to image processing of various kinds based on the above-mentioned setting when a predetermined setting is made from the operation section 15.

Alternatively, the management and control section 18 provides control in such a way that the request instructed by the operation section 15 is sent to the image recording apparatus 20 through the transfer control section 13.

In the management apparatus 10 having the above-mentioned configuration operates as follows: When a user gives various instructions to the management apparatus 10 using the operation section 15 such as a mouse and keyboard on the display section 16, the instruction information is stored in the storage section 14.

When the above-mentioned preparation has been made, the system starts loading of the page description language (PDL data) including the color information from the upstream terminal 2 through the input section 11, and evaluates if the PDL data supply has terminated or not.

When entered in the input section 11, the image data of the edit image file as multi-valued gradation data described in various types of page description language having been edited and processed by an external upstream terminal 2 and having been transferred is expanded into the image data such as raster data by the data processing section 12. At the same time, processing of plate separation is carried out for separation into predetermined colors of Y, M, C and K according to the image data, if the plate is not yet separated. When expansion and plate separation are carried out by the data processing section 12 and others, the color separation plate file (dot image data) required to create a sheet of color proof is generated by the data processing section 12 and the pixel of the dot image data is generated.

Normally, in the RIP processing, single-color raster type gradation data for each color plate is output in the number equivalent to the number of colors. This data can be the data with color gradation values arranged for each pixel.

Further, processing of late separation where the image data with Y, M, C and K present together is separated (decomposed) into each data item can be carried out by the upstream terminal 2 for editing or by the data processing section 12. In other words, the image data normally takes the form of one data file where process colors (C, M, Y and K) are present together. Depending on the case, each color plate is supplied as separate data file. When each color plate is supplied as separate data, processing of plate separation in the data processing section is omitted.

In this case, when the above-mentioned dot image data must be subjected to image processing of various kinds, instructions such as start of transfer are given after image processing has been completed using the operation section 15 and display section 16, and the above-mentioned dot image data can be sent.

Then the transfer control section 13 sends data to the image recording apparatus 20 and the image recording apparatus 20 receives the color plate data in field sequence from the management apparatus 10 according to a predetermined order.

When correction in the image recording apparatus according to the first embodiment is to be processed by the management apparatus, the management apparatus accesses the image recording apparatus on a periodic basis to get the photometric data for measuring light on a periodic basis or when the image recording apparatus has booted, namely, information of the light intensity measuring table.

Before the image data is sent to the image recording apparatus 20, single photometry instruction is sent to allow single photometry to be performed by the image recording apparatus. The information on the result of single photometry by the image recording apparatus is obtained and processed.

Based on the information obtained in this manner, the same processing as that of the above-mentioned correction processing section 29 is carried out by the data processing section 12. Tables in the various kinds of information 14a are updated. Then the updated information is sent to the image recording apparatus, and an instruction is sent to update tables in the image recording apparatus.

After termination of rewriting has been confirmed, image output request and image data are sent, and image output processing at the corrected amount of light exposure is carried out.

Such processing can be performed by first acquisition means, second acquisition means, photometric coefficient calculation means and light intensity correction means formed in the data processing section of the management apparatus to be described later.

The first acquisition means gives instructions to the image recording apparatus to cause the light sources to emit light, based on the image output signals of all graduations so that light is measured by the light measuring means, thereby getting information on the light intensity for each gradation by the light measuring means. The second acquisition means selects at least one specific gradation from the image output signals of multi-scale gradation for the image recording apparatus before the image output instruction is sent to the image recording apparatus and causes the light sources to emit light according to this specific gradation. It further gives instructions to allow one-dot photometry to be performed by the light measuring means and gets the information on the pre-exposure light intensity value in one-dot photometry by the light measuring means.

Similarly to the first embodiment, the photometric coefficient calculating means calculates the error of light intensity in light measurement as photometric coefficient according to the pre-exposure light intensity value and light intensity value. The light intensity correction means performs correction operation for the image output signal when the image is exposed, according to the photometric coefficient calculated by the photometric coefficient calculating mean, whereby the above-mentioned light intensity is corrected.

Further, the transfer control means sends the information on the result of correcting by the light intensity correction means to the image recording apparatus, and gives instructions to update the information in the image recording apparatus.

Similarly to the variation example of the first embodiment, when gradation is different between the low and intermediate light intensity portions, the second acquisition means selects at least one specific gradation corresponding to intermediate light intensity portion from the image output signals of multi-scale gradation and multiple gradations corresponding to the low light intensity portion having the light intensity lower than that of the intermediate light intensity portion for the image recording apparatus before the image output instruction is sent to the image recording apparatus and causes the light sources to emit light according to the relevant gradation. It gives instructions to perform one-dot photometry by the light measuring means, and gets the information on the pre-exposure light intensity value by the light measuring means.

The present embodiment allows correction operation to be performed by the management apparatus. Thus, when the different types of the image recording apparatus are used, for example, when one image recording apparatus has multiple light sources while the other has only one, part of the operability process can be simplified.

The apparatus and method of the present invention has been described with reference to some of the specific embodiments. Those skilled in the art can produce many variations of the embodiments described in the body of the text on the present invention without departing from the spirit and scope of the present invention.

### (Information recording media and computer program products)

It is possible to arrange such a configuration that the information recording medium or computer readable medium records all or some of the processing programs to be processed in a color proof creating system (image recording system) of the above-mentioned embodiments, management apparatus using this system, an image recording apparatus, upstream terminal, sub-host, host, design system, front system, host system and center system, processing described, for example, the above-mentioned methods (procedures), techniques generally described in this specification, and various types of data (e.g., tables, operation programs and other information for correction operation, screen data). It is also possible to configure a computer program product. Further, it is also possible to use the configuration where the above-mentioned processing programs are incorporated into electronic mail software that can be operated by the general personal computer or portable terminal. An information recording medium for recording the incorporated electronic mail software is also acceptable.

This information recording medium can be a semiconductor memory such as a ROM, RAM, flash memory, memory device such as an integrated circuit, optical disk, photomagnetic disk (CD-ROM DVDRAM and DVDROM MO, etc.) and magnetic recording medium <magnetic disk> (hard disk floppy (R) disk ZIP, etc.). Further, such information can be recorded on a nonvolatile memory card, IC card or network resources.

Examples of the recording media include a radio or infrared transmission channel between a computer and other devices, a computer readable card, e.g. PCMCIA card, and a device for temporarily store the information downloaded by the Internet or Intranet, including the information obtained by connection with a device on another computer or network via the network and electronic mail transmission or through a web site.

When the above-mentioned information recording medium is used in a system or apparatus other than the system conforming to the above-mentioned embodiment and the system or apparatus reads and executes the program code stored in this storage medium, the functions equivalent to those of the above-mentioned embodiment can be realized. At the same time, the equivalent advantages can be obtained.

When part or whole of processing is to be performed by the OS (operating system) running on the computer and management system, and RTOS on the information terminal and image recording apparatus, or when, after the program code having been read from the storage area is written into the memory of the extension function board inserted into the computer or the extension function unit connected to the computer, the CPU or the like loaded on the extension function board and extension function unit performs part of whole of processing in conformity to the instruction of this program, then the functions equivalent to those of the above-mentioned embodiment can be realized. At the same time, the equivalent advantages can be obtained.

The program described in the present embodiment is preferred to be resident in the memory. Any data that is read, controlled and obtained from the intermediate storage area of the program and network at the time of execution can be realized using the semiconductor memory. In some instances, part or whole of the program is recorded on a predetermined recording medium and is supplied to the user. It may be read through the corresponding device or may be read by the user from the network through a modem. Further, various types of protocol can be adopted as a form of communications form using the network.

To put it more specifically, the computer program product has a computer readable medium that records the program for correcting light intensity at the time of processing to create a color proof by the image recording apparatus comprising a light measuring means for measuring the light intensity of the light source that allows light intensity to be modified. It includes: first light intensity measuring means that causes the light source to emit light based on the image output signal of all gradations and calculates the light intensity value for each gradation when light is measured by the light measuring means; second light intensity measuring means that selects at least one specific gradation from the image output signals of multi-scale gradation before exposure of the image, causes the light source to emit light based on the specific gradation, and calculates the pre-exposure light intensity value when one-dot photometry has been performed by the light measuring means; photometric coefficient calculating means for calculating the error of light intensity in light measurement as a photometric coefficient, according to the pre-exposure light intensity value and light intensity value; and light intensity correction means for performing correction operation for the image output signal during exposure of the image according to the photometric coefficient worked out by the photometric coefficient calculating means and correcting the light intensity.

Further, the computer program product has a computer readable medium that records the program for correcting light intensity at the time of processing to create a color proof by the image recording apparatus comprising a light measuring means for measuring the light intensity of the light source that allows light intensity to be modified. It includes: first light intensity measuring means that causes the light source to emit light based on the image output signal of all gradations and calculates the light intensity value for each gradation when light is measured by the light measuring means; second light intensity measuring means that selects at least one specific gradation equivalent to the intermediate light intensity portion and multiple gradations equivalent to the low light intensity portion having a light intensity lower than that of the intermediate light intensity portion, from the image output signals of multi-scale gradation before exposure of the image, causes the light source to emit light based on each the specific gradations, and calculates the pre-exposure light intensity value when light has been measured by the light measuring means; photometric coefficient calculating means for calculating the error of light intensity in light measurement as a photometric coefficient, according to the pre-exposure light intensity value and light intensity value; and light intensity correction means for performing correction operation for the image output signal during exposure of the image according to the photometric coefficient worked out by the photometric coefficient calculating means and correcting the light intensity.

Still further, the computer program product has a computer readable medium that records the program for correcting light intensity at the time of processing to create a color proof by the image recording apparatus comprising a light measuring means for measuring the light intensity of the light source that allows light intensity to be modified. It includes: first acquisition means that gives instructions to the image recording apparatus to cause the light sources to emit light, based on the image output signals of all graduations so that light is measured by the light measuring means, thereby getting information n the light intensity for each gradation by the light measuring means; second acquisition means that selects at least one specific gradation from the image output signals of multi-scale gradation for the image recording apparatus, before the image output instruction is sent to the image recording apparatus, and causes the light sources to emit light according to this specific gradation; the second acquisition means further giving instructions to allow one-dot photometry to be performed by the light measuring means and getting the information on the pre-exposure light intensity value in one-dot photometry by the light measuring means; photometric coefficient calculating means that calculates the error of light intensity in light measurement as photometric coefficient according to the pre-exposure light intensity value and light intensity value; and light intensity correction means that performs correction operation for the image output signal when the image is exposed, according to the photometric coefficient calculated by the photometric coefficient calculating mean, whereby the above-mentioned light intensity is corrected.

Still further, the computer program product has a computer readable medium that records the program for correcting light intensity at the time of processing to create a color proof by the image recording apparatus comprising a light measuring means for measuring the light intensity of the light source that allows light intensity to be modified. It includes: first acquisition means that gives instructions to the image recording apparatus to cause the light sources to emit light, based on the image output signals of all graduations so that light is measured by the light measuring means, thereby getting information n the light intensity for each gradation by the light measuring means; second acquisition means that selects at least one specific gradation equivalent to the intermediate light intensity portion and multiple gradations equivalent to the low light intensity portion having a light intensity lower than that of the intermediate light intensity portion from the image output signals of multi-scale gradations, before the image output instruction is sent to the image recording apparatus, and causes the light sources to emit light according to this specific gradation; the second acquisition means further giving instructions to allow light to be measured light by the light measuring means and getting the information on the pre-exposure light intensity value measured by the light measuring means; photometric coefficient calculating means that calculates the error of light intensity in light measurement as photometric coefficient according to the pre-exposure light intensity value and light intensity value; and light intensity correction means that performs correction operation for the image output signal when the image is exposed, according to the photometric coefficient calculated by the photometric coefficient calculating mean, whereby the above-mentioned light intensity is corrected.

Further, the information recording medium records the program for implementing the light intensity correction method in an image recording apparatus that records an image by exposing a photosensitive material to the light source that allows light intensity to be modulated. It contains: information for processing extraction of the light intensity value for each gradation when the light source is made to emit light according to the image output signals of all gradations and light is measured by light measuring means; information for processing extraction of the pre-exposure light intensity value for each gradation when at least one specific gradation is selected from the image output signals of multi-scale gradation before exposure of the image, the light source is made to emit light based on the specific gradation, and one-dot photometry is by the light measuring means; and information for calculating the error of light intensity in light measurement as photometric coefficient according to the pre-exposure light intensity value and light intensity value, and processing correction of the light intensity according to the photometric coefficient.

Still further, the information recording medium records the program for implementing the light intensity correction method in an image recording apparatus that records an image by exposing a photosensitive material to the light source that allows light intensity to be modulated. It contains: a step of extracting the light intensity value for each gradation when the light source is made to emit light according to the image output signals of all gradations and light is measured by light measuring means; a step of extracting the pre-exposure light intensity value when selection is made of at least one specific gradation equivalent to the intermediate light intensity portion and multiple gradations equivalent to the low light intensity portion having a light intensity lower than that of the intermediate light intensity portion from the image output signals of multi-scale gradations before the image is exposed, the light source is made to emit light based on each of the specific gradations, and light is measured by the light measuring means; and a step of calculating the error of light intensity in light measurement as photometric coefficient according to the pre-exposure light intensity value and light intensity value, and correcting the light intensity according to the photometric coefficient.

It is also acceptable to configure a system by incorporating the "color proof creating system" according to the present embodiment into the lower-order hierarchy of a certain "system", and to use this entire system as a "system" of the present invention.

Without being restricted to a personal computer, the information processing apparatus mounted on the above-mentioned system is exemplified by a server of various types, an EWS (Engineering WorkStation), a computer of intermediate size and a mainframe. When used as a server, each of them can be used as a terminal that can be accessed. Further, the terminal can be configured to allow use from a portable information terminal, a mobile terminal of various types, a PDA, a cellular phone, a pager, etc. Further, the improvements of applications indicated on these terminals can be included within the scope of the present invention.

The method (procedure) shown in Figs. 10 and 11, technique generally described in this specification, databases of various kinds and information of display screen data can be utilized by a computer. Such a system is realized by the instruction of software executed by a computer as software such as application program executed in the computer system. Software can be divided into two parts; one for performing the above-mentioned method and the other for managing the interface between the computer and user. Software may be stored in a computer readable medium including the storage device, for example. Software is loaded into a computer from the computer readable medium and is executed by the computer. Such a computer readable medium where software or computer program is recorded constitutes a computer program product. Use of the computer program product in a computer provides a convenient device.

The program described in the present embodiment is preferred to be resident in a hard disk or a memory. When executed, it is read and controlled by a CPU. Any data taken out of the intermediate storage area of the program or network can be realized using the semiconductor memory or together with a hard disk apparatus. In some instances, application program may be recorded on the CD-ROM or floppy (R) disk and supplied to the user. It may be read through the corresponding device or may be read by the user from the network through a modem.

Software can be loaded into a computer system from a magnetic tape, ROM or integrated circuit, magneto-optical disk, a radio or infrared transmission channel a computer module and other devices, a computer readable card such as PCMCIA card, and other computer readable media including the Internet or Intranet, containing the information recorded on electronic mail transmission or through a web site. The above-mentioned description provides only examples of related computer readable media. Other computer readable media can be used without departing from the spirit of the present invention.

It is apparent from the above-mentioned description that the embodiment of the present invention is applicable to the fields of computer industry and data processing industry, as well as to the field of possible computer applications that do not necessarily conform to a specific standard.

Further, the above-mentioned embodiment is preferred to be processed by an ordinary general computer such as an IBM-PC/AT compatible, Macintosh computer and Sun Workstation.

The CPU is used to set up various types of commands. These commands are preferred to be a series of coded instructions given to the RIP for execution of the processing including composition and convolution on the image data (pixel). This processing is can be carried out by the computer software composed of a command set to be executed using a processing unit that can be executed using a general microprocessor, customized signal processor or the like.

In order that the command set is stored in the internal or external memory connected to the processing unit for executing the command set that executes a processing module, the command set can be loaded in a recording medium or nonvolatile memory. Further, the computer readable medium can be exemplified by a floppy (R) disk, magnetic storage device or hard disk, optical disk, opto-magnetic disk, nonvolatile memory card, and networked resources.

This invention can be applied to either a system composed of multiple systems (e.g. host computer, interface equipment, reader and printer), or a system composed of one device (e.g. copying machine and fax machine). Further, it goes without saying that the storage medium recording the software program code for performing the function of the above-mentioned embodiment is supplied to the system or apparatus, the computer (or CPU and MPU) of which is reads and run the program code stored in the storage medium.

In this case, the program code itself having been read from the storage medium performs the function of the present embodiment, the storage medium retaining the program code constitutes the present invention. The storage medium for supplying the program code includes a floppy (R) disk, hard disk, optical disk, opto-magnetic disk, CD-ROM, CD-R, magnetic tape, nonvolatile memory card, and ROM.

The function of the above-mentioned embodiment is performed by execution of the program code having been read by the computer. Not only that, it goes without saying that the OS (operating system) running on the computer carries out part or whole of the actual processing, based on the instruction of the program code, and this processing realizes the function of the present embodiment, in some cases.

It also goes without saying that, after the program code having been read from the storage medium has been written into the memory of the function extension board inserted into the computer or the function extension unit connected to the computer, the CPU of the function extension board or function extension unit performs part or whole of the processing, based on the instruction of the program code, and this processing realizes the function of the above-mentioned embodiment, in some cases.

The above-mentioned embodiment contains various kinds of phases. Various inventions can be extracted by a proper combination of the multiple disclosed configuration factors. In other words, it goes without saying that it includes examples based on a combination between the above-mentioned embodiments, or between one of them and each of their variations. In this case, even if there is no special reference in the present embodiment, the effects and advantages that are apparent from the configurations disclosed in each embodiment and variation can be obtained in the examples, as a matter of course. It is also possible to design a configuration where some of the constituent factors are eliminated from all the constituent factors shown in the embodiment.

For ease of explanation of the present invention, the above-mentioned description has disclosed the examples of the embodiments of the present invention. The present embodiments are therefore to be considered as illustrative and not restrictive, and can be properly transformed and/or modified within a predetermined scope. Therefore, the factors disclosed in the present embodiments include all design changes and equivalent items within the technological scope of the present invention.

The present invention described above measures only the light intensity of one-dot image output signal (gradation value) and carries out correction operation for the light intensity of all gradations, with the result that required time is reduced, and high-precision correction of light intensity is provided in a shorter time. Further, correction is also possible in a shorter time despite increase in the number of light sources by multiple beams, thereby ensuring a stable image density despite changes in the environment of such a light source such as semiconductor laser.

Disclosed embodiment can be varied by a skilled person without departing from the spirit and scope of the invention.

## Claims

1. An apparatus for recording an image on a photosensitive material by exposing light, emitted from a light source capable of modulating intensity of said light, onto said photosensitive material, said apparatus comprising:
a photometry section to measure said intensity of said light emitted from said light source;
a first photometry-processing section to find first light-intensity values for every gradation level, based on said intensity of said light measured by said photometry section, by controlling said light source so as to emit said light based on image-outputting signals corresponding to all of gradation levels;
a second photometry-processing section to find second light-intensity values for at least a specific gradation level selected out of said gradation levels, based on said intensity of said light measured by said photometry section, by controlling said light source so as to emit said light based on an image-outputting signal corresponding to said specific gradation level before exposing said image onto said photosensitive material;
a photometry-coefficient calculating section to calculate photometry-coefficients, serving as light-intensity errors in photometry, based on said first light-intensity values and said second light-intensity values; and
a light-intensity correcting section to correct said intensity of said light for every gradation level, by performing arithmetic calculations for correcting image-outputting signals of said image to be exposed onto said photosensitive material, based on said photometry-coefficients calculated by said photometry-coefficient calculating section.

2. The apparatus of claim 1,
wherein said second photometry-processing section finds said second light-intensity values for at least a first specific gradation level selected out of middle-gradation levels included in said gradation levels and a second gradation level selected out of low-gradation levels, being lower than said middle-gradation levels, based on said intensity of said light measured by said photometry section, by controlling said light source so as to emit said light based on image-outputting signals corresponding to said first specific gradation level and said second gradation level before exposing said image onto said photosensitive material.

3. The apparatus of claim 1,
wherein said apparatus includes a plurality of light sources, each of which is equivalent to said light source, and said light-intensity correcting section corrects said intensity of said light for every gradation level with respect to each of said plurality of light sources.

4. The apparatus of claim 1,
wherein said light source employs a light emitting diode.

5. The apparatus of claim 1,
wherein said first photometry-processing section performs a photometry-processing for finding said first light-intensity values for every gradation level at a predetermined time or a starting-up time of said apparatus.

6. An apparatus for controlling an image-recording apparatus, which records an image on a photosensitive material by exposing light and which is provided with a photometry section to measure intensity of said light emitted from a light source capable of modulating said intensity of said light, said apparatus comprising:
a first acquiring section that commands said image-recording apparatus to find first light-intensity values for every gradation level, based on said intensity of said light measured by said photometry section, by controlling said light source so as to emit said light based on image-outputting signals corresponding to all of gradation levels, in order to acquire said first light-intensity values from said image-recording apparatus;
a second acquiring section that commands said image-recording apparatus to find second light-intensity values for at least a specific gradation level selected out of said gradation levels, based on said intensity of said light measured by said photometry section, by controlling said light source so as to emit said light based on an image-outputting signal corresponding to said specific gradation level before exposing said image onto said photosensitive material, in order to acquire said second light-intensity values from said image-recording apparatus before sending an image-outputting command to said image-recording apparatus;
a photometry-coefficient calculating section to calculate photometry-coefficients, serving as light-intensity errors in photometry, based on said first light-intensity values and said second light-intensity values;
a correcting-information generating section to generate correcting information for correcting said intensity of said light for every gradation level, by performing arithmetic calculations for correcting image-outputting signals of said image to be exposed onto said photosensitive material, based on said photometry-coefficients calculated by said photometry-coefficient calculating section; and
a transmission controlling section to transmit said correcting information, generated by said correcting-information generating section, to said image-recording apparatus, and to command said image-recording apparatus to revise information stored in it, based on said correcting information transmitted.

7. The apparatus of claim 6,
wherein said second acquiring section commands said image-recording apparatus to find said second light-intensity values for at least a first specific gradation level selected out of middle-gradation levels included in said gradation levels and a second gradation level selected out of low-gradation levels, being lower than said middle-gradation levels, based on said intensity of said light measured by said photometry section, by controlling said light source so as to emit said light based on image-outputting signals corresponding to said first specific gradation level and said second gradation level before exposing said image onto said photosensitive material, in order to acquire said second light-intensity values from said image-recording apparatus before sending said image-outputting command to said image-recording apparatus.

8. A system for creating a color proof, comprising:
an image-recording apparatus that records an image, serving as said color proof, on a photosensitive material by exposing light and that is provided with a photometry section to measure intensity of said light emitted from a light source capable of modulating said intensity of said light; and
a controlling apparatus that is coupled to said image-recording apparatus through a communication network so as to control said image-recording apparatus by bilaterally communicating with said image-recording apparatus;
wherein said controlling apparatus includes:
a first acquiring section that commands said image-recording apparatus to find first light-intensity values for every gradation level, based on said intensity of said light measured by said photometry section, by controlling said light source so as to emit said light based on image-outputting signals corresponding to all of gradation levels, in order to acquire said first light-intensity values from said image-recording apparatus;
a second acquiring section that commands said image-recording apparatus to find second light-intensity values for at least a specific gradation level selected out of said gradation levels, based on said intensity of said light measured by said photometry section, by controlling said light source so as to emit said light based on an image-outputting signal corresponding to said specific gradation level before exposing said image onto said photosensitive material, in order to acquire said second light-intensity values from said image-recording apparatus before sending an image-outputting command to said image-recording apparatus;
a photometry-coefficient calculating section to calculate photometry-coefficients, serving as light-intensity errors in photometry, based on said first light-intensity values and said second light-intensity values;
a correcting-information generating section to generate correcting information for correcting said intensity of said light for every gradation level, by performing arithmetic calculations for correcting image-outputting signals of said image to be exposed onto said photosensitive material, based on said photometry-coefficients calculated by said photometry-coefficient calculating section; and
a transmission controlling section to transmit said correcting information, generated by said correcting-information generating section, to said image-recording apparatus, and to command said image-recording apparatus to revise information stored in it, based on said correcting information transmitted.

9. A system for creating a color proof, comprising:
an information terminal device to edit a color image so as to output an edited-image data file;
an image-processing apparatus that is coupled to said information terminal device through a communication network so as to process said edited-image data file received from said information terminal device by bilaterally communicating with said information terminal device; and
an image-recording apparatus that is coupled to said image-processing apparatus through said communication network so as to create said color proof by bilaterally communicating with said image-processing apparatus;
wherein said image-processing apparatus develops and divides said edited-image data file, including a plurality of color data sets, into a plurality of color-form data sets, each of which corresponds to each of predetermined primary colors for printing, and sequentially transmits said plurality of color-form data sets to said image-recording apparatus through said communication network; and
wherein said image-recording apparatus creates said color proof based on said plurality of color-form data sets, transmitted from said image-processing apparatus, by exposing light, emitted from a light source capable of modulating intensity of said light, onto a photosensitive material, and said image-recording apparatus comprises:
a photometry section to measure said intensity of said light emitted from said light source;
a first photometry-processing section to find first light-intensity values for every gradation level, based on said intensity of said light measured by said photometry section, by controlling said light source so as to emit said light based on image-outputting signals corresponding to all of gradation levels;
a second photometry-processing section to find second light-intensity values for at least a specific gradation level selected out of said gradation levels, based on said intensity of said light measured by said photometry section, by controlling said light source so as to emit said light based on an image-outputting signal corresponding to said specific gradation level before exposing said image onto said photosensitive material;
a photometry-coefficient calculating section to calculate photometry-coefficients, serving as light-intensity errors in photometry, based on said first light-intensity values and said second light-intensity values; and
a light-intensity correcting section to correct said intensity of said light for every gradation level, by performing arithmetic calculations for correcting image-outputting signals of said image to be exposed onto said photosensitive material, based on said photometry-coefficients calculated by said photometry-coefficient calculating section.

10. The system of claim 9, further comprising:
a host controlling apparatus that is coupled to said image-recording apparatus through a communication network so as to control said image-recording apparatus by bilaterally communicating with said image-recording apparatus.

11. The system of claim 9, further comprising:
a controlling apparatus that is coupled to said image-recording apparatus through a communication network so as to control said image-recording apparatus by bilaterally communicating with said image-recording apparatus; and
a host controlling apparatus that is coupled to said controlling apparatus through said communication network so as to control said controlling apparatus by bilaterally communicating with said controlling apparatus.

12. A computer program for executing a light-intensity correcting operation in an image-recording apparatus, which creates a color proof on a photosensitive material by exposing light and which is provided with a photometry section to measure intensity of said light emitted from a light source capable of modulating said intensity of said light, said computer program comprising the functional steps of:
finding first light-intensity values for every gradation level, based on said intensity of said light measured by said photometry section, by controlling said light source so as to emit said light based on image-outputting signals corresponding to all of gradation levels;
finding second light-intensity values for at least a specific gradation level selected out of said gradation levels, based on said intensity of said light measured by said photometry section, by controlling said light source so as to emit said light based on an image-outputting signal corresponding to said specific gradation level before exposing an image onto said photosensitive material;
calculating photometry-coefficients, serving as light-intensity errors in photometry, based on said first light-intensity values and said second light-intensity values; and
correcting said intensity of said light for every gradation level, by performing arithmetic calculations for correcting image-outputting signals of said image to be exposed onto said photosensitive material, based on said photometry-coefficients calculated in said calculating step.

13. The computer program of claim 12,
wherein, in said second finding step, said second light-intensity values for at least a first specific gradation level selected out of middle-gradation levels included in said gradation levels and a second gradation level selected out of low-gradation levels, being lower than said middle-gradation levels, are found, based on said intensity of said light measured by said photometry section, by controlling said light source so as to emit said light based on image-outputting signals corresponding to said first specific gradation level and said second gradation level before exposing said image onto said photosensitive material.

14. A computer program for controlling an image-recording apparatus, which creates a color proof on a photosensitive material by exposing light and which is provided with a photometry section to measure intensity of said light emitted from a light source capable of modulating said intensity of said light, said computer program comprising the functional steps of:
commanding said image-recording apparatus to find first light-intensity values for every gradation level, based on said intensity of said light measured by said photometry section, by controlling said light source so as to emit said light based on image-outputting signals corresponding to all of gradation levels, in order to acquire said first light-intensity values from said image-recording apparatus;
commanding said image-recording apparatus to find second light-intensity values for at least a specific gradation level selected out of said gradation levels, based on said intensity of said light measured by said photometry section, by controlling said light source so as to emit said light based on an image-outputting signal corresponding to said specific gradation level before exposing an image onto said photosensitive material, in order to acquire said second light-intensity values from said image-recording apparatus before sending an image-outputting command to said image-recording apparatus;
calculating photometry-coefficients, serving as light-intensity errors in photometry, based on said first light-intensity values and said second light-intensity values acquired in said first commanding step and said second commanding step, respectively;
generating correcting information for correcting said intensity of said light for every gradation level, by performing arithmetic calculations for correcting image-outputting signals of said image to be exposed onto said photosensitive material, based on said photometry-coefficients calculated in said calculating step;
transmitting said correcting information, generated in said generating step, to said image-recording apparatus; and
commanding said image-recording apparatus to revise information stored in it, based on said correcting information transmitted.

15. The computer program of claim 14,
wherein, in said second commanding step, said image-recording apparatus finds said second light-intensity values for at least a first specific gradation level selected out of middle-gradation levels included in said gradation levels and a second gradation level selected out of low-gradation levels, being lower than said middle-gradation levels, based on said intensity of said light measured by said photometry section, by controlling said light source so as to emit said light based on image-outputting signals corresponding to said first specific gradation level and said second gradation level before exposing said image onto said photosensitive material.

16. A method for performing a light-intensity correcting operation in an image-recording apparatus, which records an image on a photosensitive material by exposing light and which is provided with a photometry section to measure intensity of said light emitted from a light source capable of modulating said intensity of said light, said method comprising the steps of:
finding first light-intensity values for every gradation level, based on said intensity of said light measured by said photometry section, by controlling said light source so as to emit said light based on image-outputting signals corresponding to all of gradation levels;
finding second light-intensity values for at least a specific gradation level selected out of said gradation levels, based on said intensity of said light measured by said photometry section, by controlling said light source so as to emit said light based on an image-outputting signal corresponding to said specific gradation level before exposing said image onto said photosensitive material;
calculating photometry-coefficients, serving as light-intensity errors in photometry, based on said first light-intensity values and said second light-intensity values; and
correcting said intensity of said light for every gradation level, by performing arithmetic calculations for correcting image-outputting signals of said image to be exposed onto said photosensitive material, based on said photometry-coefficients calculated in said calculating step.

17. The method of claim 16,
wherein, in said second finding step, said second light-intensity values for at least a first specific gradation level selected out of middle-gradation levels included in said gradation levels and a second gradation level selected out of low-gradation levels, being lower than said middle-gradation levels, are found, based on said intensity of said light measured by said photometry section, by controlling said light source so as to emit said light based on image-outputting signals corresponding to said first specific gradation level and said second gradation level before exposing said image onto said photosensitive material.

18. The method of claim 16,
wherein said image-recording apparatus includes a plurality of light sources, each of which is equivalent to said light source, and said light-intensity correcting operation for correcting said intensity of said light for every gradation level is performed with respect to each of said plurality of light sources.

19. The method of claim 16,
wherein said light source employs a light emitting diode.

20. The apparatus of claim 16,
wherein, in said first finding step, a photometry-processing for finding said first light-intensity values for every gradation level is performed at a predetermined time or a starting-up time of said apparatus.
